(19) Europäisches Patentamt

European Patent Office

Office européen des brevets

(11) **EP 4 660 797 A1**

(12) **EUROPEAN PATENT APPLICATION**
published in accordance with Art. 153(4) EPC

(43) Date of publication:
**10.12.2025 Bulletin 2025/50**

(21) Application number: **24835074.6**

(22) Date of filing: **14.03.2024**

(51) International Patent Classification (IPC):
*G06F 9/451* (2018.01)

(52) Cooperative Patent Classification (CPC):
**G06F 3/0485; G06F 9/451**

(86) International application number:
**PCT/CN2024/081770**

(87) International publication number:
**WO 2025/007587 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 CN 202310821474**

(71) Applicant: **Honor Device Co., Ltd.
Shenzhen, Guangdong 518040 (CN)**

(72) Inventor: **WANG, Qiang
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **DISPLAY METHOD AND RELATED APPARATUS**

(57) This application provides a display method and a related apparatus. The method is applied to a terminal device. The method includes: displaying an interface of a first application when a screen projection or screen recording function is not enabled; receiving an operation of pressing and swiping up that is performed by a user, and displaying, in response to a lifting operation performed by the user, a first animation after the first time point and before the second time point, where a preset thread of Surfaceflinger is invoked first and a drawing thread is then invoked after the first time point; after the second time point, enabling the screen recording or screen projection function, and displaying the interface of the first application; receiving the operation of pressing and swiping up that is performed by the user, and displaying, in response to the lifting operation performed by the user, the first animation after a third time point and before a fourth time point; and not invoking the preset thread after the third time point and before the drawing thread is invoked. The method helps reduce a frame loss or stuttering of the first animation.

FIG. 4A

**(Cont. next page)**

CONT. FROM FIG. 4A    CONT. FROM FIG. 4A    CONT. FROM FIG. 4A    CONT. FROM FIG. 4A    CONT. FROM FIG. 4A    CONT. FROM FIG. 4A

S418: Calculate parameters of all frames of the main card in an animation

S419: The parameters of all the frames of the main card

S422: Obtain the parameters of the main card frame by frame, calculate parameters of the another card based on the parameters of the main card, and draw the another card

S420: Draw the main card frame by frame

S421: Store the drawn main card in the buffer frame by frame

S423: Store the drawn another card in the buffer frame by frame

S424: Obtain the main card and the another card from the buffer frame by frame, and synthesize the main card and the another card frame by frame

S425: Synthesized information

S426: Create an animator object

S427: Calculate parameters of an Nth frame of the main card and parameters of an Nth frame of the another card

S428: The parameters of the Nth frame of the main card

S431: Draw the Nth frame of the another card

S429: Draw the Nth frame of the main card

S430: Store the drawn Nth frame of the main card in the buffer

S432: Store the drawn Nth frame of the another card in the buffer

S433: Obtain the Nth frame of the main card and the Nth frame of the another card from the buffer, and synthesize the Nth frame of the main card and the Nth frame of the another card

S434: Synthesized information

S435: Synthesize all frames in an animation according to a process from S427 to S434

FIG. 4B

## Description

This application claims priority to Chinese Patent Application No. 202310821474.1, filed with the China National Intellectual Property Administration on July 05, 2023 and entitled "DISPLAY METHOD AND RELATED APPARATUS", which is incorporated herein by reference in its entirety.

## TECHNICAL FIELD

This application relates to the field of terminal technologies, and in particular, to a display method and a related apparatus.

## BACKGROUND

With technology development, functions of terminal devices such as a mobile phone are increased. For example, when displaying an interface of an application, a terminal device, for example, a mobile phone, detects an operation of pressing a screen and swiping up that is performed by a user, and displays a multitask interface in response to the operation of pressing a screen and swiping up that is performed by the user. The multitask interface includes at least one card, the at least one card includes a card corresponding to the application, and may further include a card corresponding to another application running in a background. The terminal device, for example, the mobile phone, detects a lifting operation performed by the user, and moves the at least one card to a specific position in the multitask interface in response to the lifting operation performed by the user. A process in which the at least one card moves to the specific position in the multitask interface may be referred to as an animation. An animation display function of the terminal device, for example, the mobile phone, may be referred to as an animation effect function of swiping up to enter multitasking.

Currently, when the terminal device performs the animation effect function of swiping up to enter multitasking, a frame loss or stuttering may occur.

## SUMMARY

Embodiments of this application provide a display method and a related apparatus, which are applied in the field of terminal technologies, thereby helping reduce a frame loss or stuttering when an animation effect function of swiping up to enter multitasking is performed.

According to a first aspect, an embodiment of this application provides a display method. The method may be applied to a terminal device. The method includes: displaying an interface of a first application when a screen projection or screen recording function of the terminal device is not enabled; receiving an operation of pressing and swiping up that is performed by a user, and displaying, in response to a lifting operation performed by the user, a first animation after a first time point and before a second time point, where a preset thread of Surfaceflinger is invoked first and a drawing thread is then invoked after the first time point, and the second time point is after the first time point; displaying a multitasking interface at the second time point; after the second time point, enabling the screen recording or screen projection function of the terminal device, and displaying the interface of the first application; receiving the operation of pressing and swiping up that is performed by the user, and displaying, in response to the lifting operation performed by the user, the first animation after a third time point and before a fourth time point, where the preset thread is not invoked after the third time point and before the drawing thread is invoked, and the fourth time point is after the third time point; and displaying the multitasking interface at the fourth time point.

That a screen projection or screen recording function of the terminal device is not enabled may be understood as that the terminal device is in a non-screen projection and non-screen recording scenario. The first application may be a Messages application, a Settings application, a chat application, or the like. The first animation is displayed after the first time point and before the second time point, and the second time point is after the first time point, it may indicate that display duration of the first animation is a time difference between the second time point and the first time point. The multitasking interface is displayed at the second time point, it may indicate that a last frame of the first animation is the multitasking interface. The multitasking interface may also be referred to as a multitask interface. This is not limited in this application. In a process of displaying the first animation, the preset thread of the Surfaceflinger is invoked first and the drawing thread is then invoked, it may indicate that, when the screen projection or screen recording function of the terminal device is not enabled, the terminal device uses an animation effect sink function of swiping up to enter multitasking provided in embodiments of this application in a specific embodiment.

That the screen recording or screen projection function of the terminal device is enabled may be understood as that the terminal device is in a screen projection or screen recording scenario. The first animation is displayed after the third time point and before the fourth time point, and the fourth time point is after the third time point, it may indicate that display duration of the first animation is a time difference between the fourth time point and the third time point. The multitasking interface is displayed at the fourth time point, it may indicate that a last frame of the first animation is the multitasking interface. In a process of displaying the first animation, the preset thread is not invoked before the drawing thread is invoked, it may indicate that, when the screen projection or screen recording function of the terminal device is enabled, the terminal device uses an existing animation effect function of swiping up to enter multitasking in a specific embodiment.

In this way, in the process of displaying the first animation when the screen projection or screen recording function of the terminal device is not enabled, the preset thread of the Surfaceflinger is invoked first and the drawing thread is then invoked, to use the animation effect sink function of swiping up to enter multitasking provided in the embodiments of this application in a specific embodiment, thereby helping avoid a frame loss or stuttering. In the process of displaying the first animation when the screen projection or screen recording function of the terminal device is enabled, the preset thread is not invoked before the drawing thread is invoked, to use the existing animation effect function of swiping up to enter multitasking in a specific embodiment, thereby helping reduce a probability of no animation.

In a possible implementation, the method further includes: further invoking a frame rate obtaining thread after the first time point and before the second time point and before the drawing thread is invoked; and not invoking the frame rate obtaining thread after the third time point and before the fourth time point.

The frame rate obtaining thread, the preset thread, and the drawing thread are invoked in the process of displaying the first animation after the first time point and before the second time point, it may indicate that, when the screen projection or screen recording function of the terminal device is not enabled, the terminal device uses the animation effect sink function of swiping up to enter multitasking provided in the embodiments of this application in a specific embodiment.

The frame rate obtaining thread and the preset thread are not invoked but the drawing thread is invoked in the process of displaying the first animation after the third time point and before the fourth time point, it may indicate that, when the screen projection or screen recording function of the terminal device is enabled, the terminal device uses the existing animation effect function of swiping up to enter multitasking in a specific embodiment.

In this way, in the process of displaying the first animation when the screen projection or screen recording function of the terminal device is not enabled, the frame rate obtaining thread is further invoked to obtain a frame rate, and the frame rate is related to a quantity of frames included in the first animation, thereby helping calculate the quantity of frames included in the first animation. In the process of displaying the first animation when the screen projection or screen recording function of the terminal device is enabled, the frame rate obtaining thread is not invoked to obtain the frame rate, thereby helping reduce a load.

In a possible implementation, the method further includes: displaying an interface of a second application; and displaying a second animation in response to an operation of returning to a home screen that is performed by the user, where a render thread is not invoked in a process of displaying the second animation.

The interface of the second application may be the same as or different from the interface of the first application. This is not limited in this application. The operation of returning to the home screen that is performed by the user is detected when the terminal device displays the interface of the second application, and the second animation is displayed in response to the operation of returning to the home screen that is performed by the user. The second animation is a process in which the interface of the second application is transitioned to the home screen. The render thread is not invoked in the process of displaying the second animation by the terminal device, and the render thread is render Thread.

The render thread is not invoked in the process of displaying the second animation by the terminal device, it may indicate that the terminal device uses the animation effect sink function of swiping up to enter multitasking provided in the embodiments of this application in a specific embodiment.

In this way, the render thread is not invoked in another scenario of displaying an animation, for example, the second animation, it may indicate that the terminal device uses the animation effect sink function of swiping up to enter multitasking provided in the embodiments of this application in a specific embodiment, thereby helping avoid the frame loss or stuttering.

In a possible implementation, the first animation includes M image frames, each of the M image frames includes a card of the first application, and M is an integer greater than 0; and the method further includes: after the first time point, invoking a thread of Launcher to calculate parameters of the card of the first application included in each of the M image frames, to obtain M groups of first parameters; invoking the thread of the Launcher to transmit the M groups of first parameters together to the Surfaceflinger; and invoking the preset thread and the drawing thread to perform drawing based on the M groups of first parameters.

The card of the first application is referred to as a main card in a specific embodiment. That the first animation includes M image frames, each of the M image frames includes a card of the first application is described as all frames of a main card in an animation in a specific embodiment. The M groups of first parameters are described as parameters of all the frames of the main card in a specific embodiment.

In this way, when invoking the thread of the Launcher to calculate the parameters of the card of the first application, the terminal device calculates all parameters of the card of the first application, and transmits these parameters together to the Surfaceflinger. When invoking the Surfaceflinger for drawing, the terminal device may obtain all the parameters to perform drawing based on all the parameters, thereby preventing the thread of the Launcher from failing to calculate parameters of one or more frames of the card of the first application due to an excessively large load, and further preventing the card of the first application in the first animation from the frame loss or stuttering.

In a possible implementation, each of the M image frames further includes a card of at least one application running in a background of the terminal device, and the at least one application is different from the first application; and the method further includes: after the first time point, invoking the thread of the Launcher to calculate parameters of the card of the at least one application included in an Nth image frame, to obtain second parameters, where the Nth image frame is any image frame in the M image frames, and N is an integer greater than 0 and less than or equal to M; and invoking the thread of the Launcher to perform drawing based on the second parameters.

The card of the at least one application running in the background of the terminal device is referred to as another card in a specific embodiment.

In this way, when invoking the thread of the Launcher to calculate the parameters of the card of the at least one application, the terminal device calculates parameters of one frame of the card of the at least one application, for example, the parameters of the card of the at least one application included in the Nth image frame, to draw the frame. In this case, the thread of the Launcher basically does not need to calculate the parameters of the card of the first application, thereby helping reduce occupation of the thread of the Launcher, and further reducing a probability of a frame loss or stuttering of the card of the at least one application in the first animation.

In a possible implementation, the invoking the thread of the Launcher to calculate parameters of the card of the at least one application included in an Nth image frame, to obtain second parameters includes: invoking the thread of the Launcher to obtain an Nth group of parameters from the M groups of first parameters, where the Nth group of parameters are parameters of the card of the first application included in the Nth image frame; and invoking the thread of the Launcher to calculate the second parameters based on the Nth group of parameters and a preset card positional relationship parameter.

The preset card positional relationship parameter includes a positional relationship between the card of the first application and the card of the at least one application.

In this way, the parameters (the second parameters) of the card of the at least one application in the Nth image frame are determined based on the parameters (that is, the Nth group of parameters) of the card of the first application in the Nth image frame and the preset card positional relationship parameter, thereby helping synchronize the card of the first application and the card of the at least one application in the first animation.

In a possible implementation, the M groups of first parameters are stored in an array, and the invoking the thread of the Launcher to obtain an Nth group of parameters from the M groups of first parameters includes: invoking the thread of the Launcher to obtain the Nth group of parameters from the array.

In this way, the parameters (that is, the M groups of first parameters) of the card of the first application included in each of the M image frames in the first animation are stored in the array, and the thread of the Launcher may be invoked to obtain any group of parameters in the M groups of first parameters, for example, the Nth group of parameters, from the array when the group of parameters is used, thereby helping quickly obtain the parameters, and further improving drawing efficiency.

In a possible implementation, a drawing parameter obtained by invoking the preset thread and the drawing thread to perform drawing based on the M groups of first parameters is stored in a buffer, and a drawing parameter obtained by invoking the thread of the Launcher to perform drawing based on the second parameters is stored in the buffer; and the method further includes: invoking the Surfaceflinger to obtain a first drawing parameter of an Nth frame of the card of the first application and a second drawing parameter of an Nth frame of the card of the at least one application from the buffer; invoking the Surfaceflinger to synthesize the first drawing parameter and the second drawing parameter, to obtain synthesized information; and invoking the Surfaceflinger to send the synthesized information for display.

The buffer is a buffer in a specific embodiment, and may be configured to store the drawing parameters.

In this way, the Surfaceflinger is invoked to obtain the first drawing parameter of the Nth frame of the card of the first application and the second drawing parameter of the Nth frame of the card of the at least one application from the buffer, and the first drawing parameter and the second drawing parameter are synchronized and sent for display, thereby helping display the Nth image frame in the animation.

In a possible implementation, M is positively correlated with a screen refresh rate of the terminal device. M is a quantity of frames, and may be represented by a symbol frameCount in a specific embodiment.

In this way, the quantity M of frames included in the first animation is positively correlated with the screen refresh rate of the terminal device, so that the first animation is better adapted to the screen refresh rate, and a displayed animation is smoother.

In a possible implementation, M and the screen refresh rate meet the following relationship: M=duratioM* 1.0/(1000* 1.0/frameRate), where duratioM is total duration for displaying the first animation, and frameRate is the screen refresh rate.

In this way, the quantity M of frames is calculated according to the formula, thereby helping quickly determine the quantity of frames.

In a possible implementation, the method further includes: after the second time point, invoking the Launcher to calculate parameters of the card of the first application included in an Lth image frame in the first animation, to obtain third parameters, where N is an integer greater than 0 and less than or equal to M; invoking the Launcher to transmit the third parameters to the Surfaceflinger; and invoking the drawing thread to perform drawing based on the third parameters.

In this way, when the terminal device is in the screen recording or screen projection scenario, parameters of one frame of the card of the first application, for example, the parameters of the card of the first application included in the Lth image frame, are calculated after the second time point, to draw the frame, thereby helping reduce a probability of no animation of the card of the first application.

In a possible implementation, the preset thread is used to set an attribute of a layer in any image frame included in the first animation.

Before performing drawing by using the drawing thread, the terminal device sets various attribute values of the layer by using the preset thread.

According to a second aspect, an embodiment of this application provides a display method. The method may be applied to a terminal device. The method includes: displaying an interface of a first application; receiving an operation of pressing and swiping up that is performed by a user, and displaying, in response to a lifting operation performed by the user, a first animation after a first time point and before a second time point, where a frame rate obtaining thread is invoked after the first time point, and the second time point is after the first time point; displaying a multitasking interface at the second time point; and after the second time point, displaying a third animation in response to an operation of returning to a home screen that is performed by the user, where a render thread is not invoked in a process of displaying the third animation.

The frame rate obtaining thread is invoked in a process of displaying the first animation after the first time point and before the second time point, it may indicate that the terminal device uses an animation effect sink function of swiping up to enter multitasking provided in embodiments of this application in a specific embodiment.

The render thread is not invoked in the process of displaying the third animation by the terminal device, where the render thread is render Thread. It may indicate that the terminal device uses the animation effect sink function of swiping up to enter multitasking provided in the embodiments of this application in a specific embodiment.

In this way, after the first time point, the frame rate obtaining thread is invoked to obtain a frame rate, where the frame rate is related to a quantity of frames included in the first animation, thereby helping calculate the quantity of frames included in the first animation. The third animation is displayed in response to the operation of returning to the home screen that is performed by the user, and the render thread is not invoked in the process of displaying the third animation, it may indicate that the terminal device uses the animation effect sink function of swiping up to enter multitasking provided in the embodiments of this application in a specific embodiment, thereby helping avoid a frame loss or stuttering.

According to a third aspect, an embodiment of this application provides a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes a processor and a memory. The memory stores computer-executable instructions. The processor executes the computer-executable instructions stored in the memory, to enable the terminal device to perform the method according to the first aspect.

According to a fourth aspect, an embodiment of this application provides a computer-readable storage medium. The computer-readable storage medium stores a computer program. When the computer program is executed by a processor, the method according to the first aspect is implemented.

According to a fifth aspect, an embodiment of this application provides a computer program product, and the computer program product includes a computer program. When the computer program is run, a computer is enabled to perform the method according to the first aspect.

According to a sixth aspect, an embodiment of this application provides a chip. The chip includes a processor, and the processor is configured to invoke a computer program in a memory to perform the method according to the first aspect.

It should be understood that the third aspect to the sixth aspect of this application correspond to the technical solutions of the first aspect or the second aspect of this application, and beneficial effects achieved in the aspects and corresponding feasible implementations are similar. Details are not described again.

**BRIEF DESCRIPTION OF DRAWINGS**

FIG. 1 is a schematic diagram of performing an animation effect function of swiping up to enter multitasking by a terminal device;

FIG. 2 is a schematic diagram of a structure of a terminal device according to an embodiment of this application;

FIG. 3 is a block diagram of a software structure of a terminal device according to an embodiment of this application;

FIG. 4A and FIG. 4B are a schematic diagram of module interaction of a display method according to an embodiment of this application;

FIG. 5 is a schematic diagram of not displaying an animation of a main card according to an embodiment of this application;

FIG. 6 is a schematic diagram of thread running according to an embodiment of this application;

FIG. 7 is a schematic diagram of an animation display process according to an embodiment of this application;

FIG. 8 is a schematic diagram of another animation display process according to an embodiment of this application;

FIG. 9 is a schematic diagram of an animation display method according to an embodiment of this application;

FIG. 10 is a schematic flowchart of calculation and drawing of a main card and another card according to an embodiment of this application;

FIG. 11 is a schematic diagram of another thread running according to an embodiment of this application; and

FIG. 12 is a schematic diagram of a structure of a chip according to an embodiment of this application.

**DESCRIPTION OF EMBODIMENTS**

1. Other terms

In the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not indicate a definite difference.

It should be noted that the word "example", "for example", or the like in embodiments of this application is used to represent giving an example, an illustration, or a description. Any embodiment or design solution described as "example" or "for example" in this application should not be construed as being preferred or advantageous over other embodiments or design solutions. Exactly, use of the word such as "example" or "for example" is intended to present related concepts in a specific manner.

In embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually represents an "or" relationship between associated objects. "At least one of the following items" or a similar expression means any combination of these items, including any combination of a single item or a plurality of items. For example, at least one of a, b, or c may represent a, b, c, a and b, a and c, b and c, or a, b, and c, where a, b, and c may be singular or plural.

2. Terminal device

A terminal device in the embodiments of this application may also be an electronic device in any form. For example, the electronic device may include a handheld device with a gesture identification function, an onboard device, or the like. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, a terminal device in a 5G network, a terminal device in a future evolved public land mobile network (public land mobile network, PLMN), and the like. This is not limited in the embodiments of this application.

As an example rather than a limitation, in the embodiments of this application, the electronic device may alternatively be a wearable device. The wearable device may also be referred to as a wearable smart device, and is a generic term for wearable devices such as glasses, gloves, watches, clothing, and shoes that are intelligently designed and developed from daily wear by using wearable technologies. The wearable device is a portable device that is worn directly on a body or integrated into clothing or accessories of a user. The wearable device is not merely a hardware device, but can implement powerful functions through software support, data interaction, and cloud interaction. In a broad sense, the wearable smart device includes a full-featured and large-size device that can implement all or some of functions without relying on a smartphone, for example a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may also be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The electronic device in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

3. Main card and another card

The main card refers to a card in a multitask interface. The multitask interface is an interface displayed by a terminal device in response to an operation of pressing a screen and swiping up that is performed by a user. The main card is a card corresponding to an application displayed when the terminal device detects the operation of pressing a screen and swiping up that is performed by the user. The main card may be a window. This is not limited in the embodiments of this application.

The another card is a card other than the main card in the multitask interface. Alternatively, the another card is a card corresponding to another application other than the application displayed when the terminal device detects the operation of pressing a screen and swiping up that is performed by the user. The another application other than the displayed application may be an application running in a background when the terminal device detects the operation of pressing a screen and swiping up that is performed by the user. The another card may be a view, and therefore may also be referred to as a view card. This is not limited in the embodiments of this application.

For example, the terminal device displays an interface of an application 1, and the terminal device detects the operation of pressing a screen and swiping up that is performed by the user, and displays a multitask interface in response to the operation of tapping a screen and swiping up that is performed by the user. The multitask interface includes a card corresponding to the application 1 and a card corresponding to an application 2. The card corresponding to the application 1 is a main card, the card corresponding to the application 2 is another card, and the application 2 is an application running in the background of the terminal device.

With technology development, functions of terminal devices such as a mobile phone are increased. For example, when displaying an interface of an application, a terminal device, for example, a mobile phone, detects an operation of pressing a screen and swiping up that is performed by a user, and displays a multitask interface in response to the operation of pressing a screen and swiping up that is performed by the user. The multitask interface includes at least one card, the at least one card includes a card corresponding to the application, and may further include a card corresponding to another application running in a background. The terminal device, for example, the mobile phone, detects a lifting operation performed by the user, and moves the at least one card to a specific position in the multitask interface in response to the lifting operation performed by the user. A process in which the at least one card moves to the specific position in the multitask interface may be referred to as an animation or an animation effect. An animation or animation effect display function of the terminal device, for example, the mobile phone, may be referred to as an animation effect function of swiping up to enter multitasking. For ease of description, animation is used as an example for description below.

Currently, when the terminal device performs the animation effect function of swiping up to enter multitasking, a frame loss or stuttering may occur.

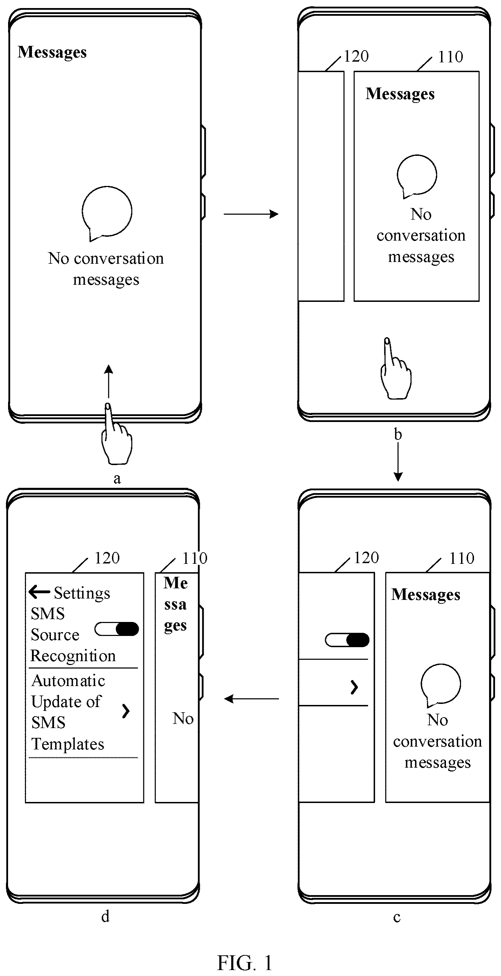

For example, FIG. 1 is a schematic diagram of performing an animation effect function of swiping up to enter multitasking by a terminal device. As shown in FIG. 1, the terminal device is a mobile phone. As shown in an interface a in FIG. 1, a currently displayed interface of the mobile phone is an interface of a Messages application. The mobile phone detects an operation of pressing a screen and swiping up that is performed by a user, and displays a multitask interface in response to the operation of pressing a screen and swiping up that is performed by the user. The multitask interface includes a card 110 corresponding to the Messages application and a card 120 corresponding to a Settings application, as shown in an interface b in FIG. 1. The mobile phone detects a lifting operation performed by the user, and moves the card 110 corresponding to the Messages application and the card 120 corresponding to the Settings application to specific positions in the multitask interface in response to the lifting operation performed by the user. In this case, an interface d in FIG. 1 is displayed, and an interface c in FIG. 1 is an interface in a process of moving the card 110 corresponding to the Messages application and the card 120 corresponding to the Settings application. In the multitask interface, the card 110 corresponding to the Messages application is a main card, and the card 120 corresponding to the Settings application is another card. A process in which the interface b in FIG. 1 is transitioned from the interface c in FIG. 1 to the interface d in FIG. 1 is an animation. In an animation display process of the mobile phone, a frame loss or stuttering may occur, affecting user experience.

It should be noted that the interfaces shown in FIG. 1 each are merely an example. In another example, if the Settings application does not run in a background of the mobile phone, the multitask interface displayed by the mobile phone may display only the card 110 corresponding to the Messages application, that is, the multitask interface includes only the main card.

When the terminal device displays the animation, the frame loss or stuttering may occur. The reason why is that when the main card in the animation is drawn, the terminal device may calculate parameters of one frame of the main card by using a main thread (UIThread) in Launcher (Launcher), where the parameters of the main card include parameters such as a position and a scale that are used to draw the main card, and draw the frame of the main card based on the parameters of the frame of the main card by using Surfaceflinger (Surfaceflinger). This process is repeated until all frames of the main card in the animation are drawn. In this case, if the main thread fails to calculate parameters of one or more frames of the main card due to an excessively large load in a calculation process, the frame loss or stuttering may occur on the main card in the animation.

In view of this, embodiments of this application provide a display method and a related apparatus. When calculating parameters of a main card in an animation by using a main thread in Launcher, a terminal device may calculate parameters of all frames of the main card in the animation at once, send the parameters of all the frames of the main card to Surfaceflinger by using the main thread, and draw the main card frame by frame based on the parameters of all the frames of the main card by using the Surfaceflinger, instead of having the main thread calculate parameters of one frame of the main card and the Surfaceflinger draw the frame of the main card. In this way, the Surfaceflinger may obtain the parameters of all the frames of the main card in the animation when drawing the main card, thereby drawing all the frames of the main card in the animation, and helping reduce a frame loss or stuttering of the main card that is caused by a failure of the main thread in calculating the parameters of the main card due to an excessively large load in an animation process.

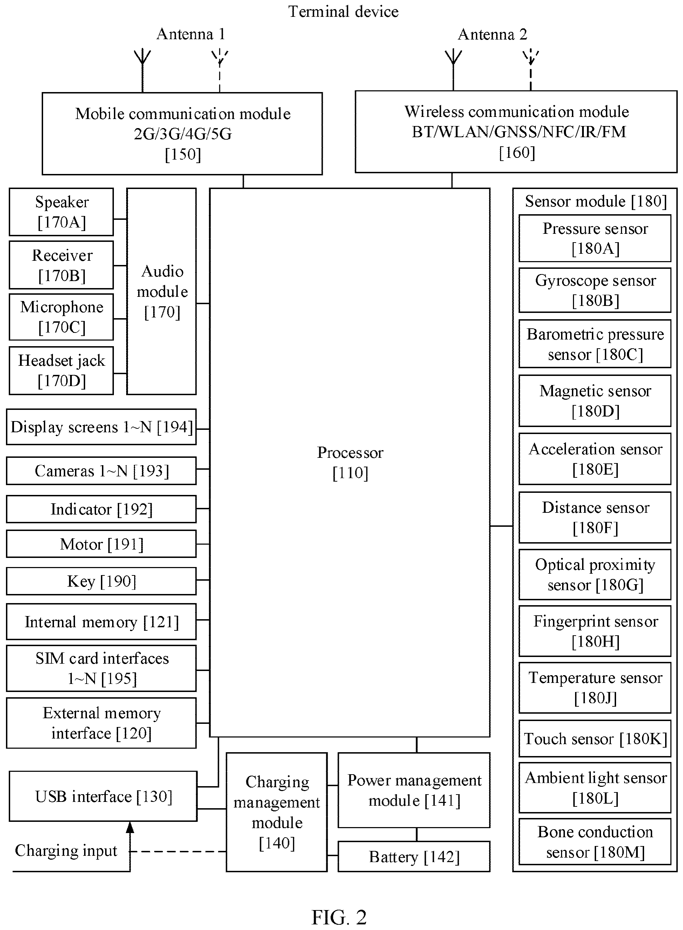

For ease of understanding, the following describes a hardware structure of the terminal device. For example, FIG. 2 is a schematic diagram of a structure of a terminal device according to an embodiment of this application. As shown in FIG. 2, the terminal device includes: the terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device. In some other embodiments of this application, the terminal device may include more or fewer parts than those shown in the figure, some parts may be combined, some parts may be split, or a different part arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. For example, the terminal device may perform a method provided in the embodiments of this application by using the processor 110.

The terminal device implements a display function by using a GPU, the display screen 194, the application processor, and the like. For example, the terminal device may display the interfaces shown in FIG. 1 by using the GPU, the display screen 194, and the application processor. The GPU is a microprocessor for image processing and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flex light-emitting diode, FLED), a Miniled, a MicroLed, a Micro-oLed, a quantum dot light-emitting diode (quantum dot light-emitting diodes, QLED), or the like. In some embodiments, the terminal device may include one or N display screens 194, where N is a positive integer greater than 1.

The internal memory 121 may be configured to store computer-executable program code, and the executable program code includes instructions. The internal memory 121 may include a program storage area and a data storage area. For example, the internal memory 121 may store code corresponding to the method provided in the embodiments of this application.

In addition, an operating system, for example, an iOS operating system, an Android (android) operating system, or a Windows operating system, is further run on the foregoing components of the device. An application may be installed and run on the operating system.

A software system of the terminal device may use a layered architecture, an event-driven architecture, a microkernel architecture, a microservice architecture, a cloud architecture, or the like. Details are not described herein.

In the embodiments of this application, an Android system with a layered architecture is used as an example to describe a software structure of the terminal device.

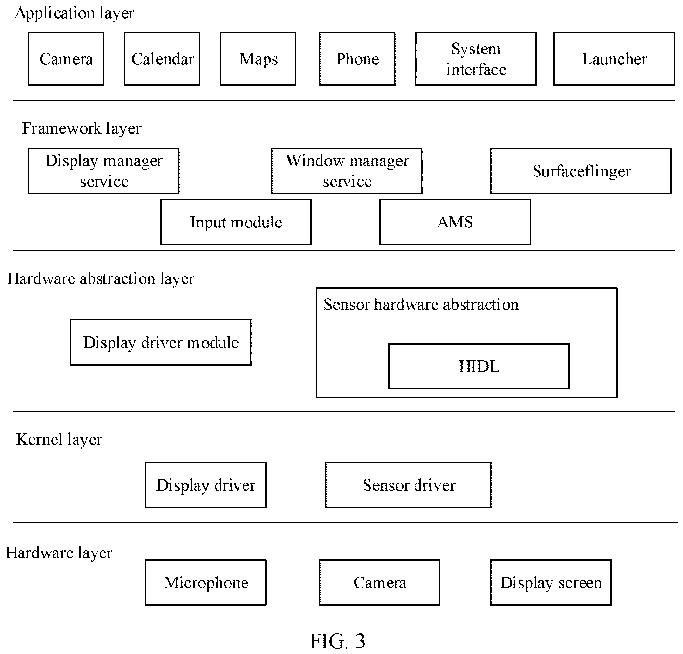

FIG. 3 is a block diagram of a software structure of a terminal device according to an embodiment of this application. In the layered architecture, software is divided into several layers, and each layer has a clear role and task. The layers communicate with each other through a software interface. In some embodiments, the Android (android) system may be divided into five layers: an application layer, a framework (framework) layer, a hardware abstraction layer (hardware abstraction layer, HAL), a kernel (kernel) layer, and a hardware layer from top to bottom.

The application layer may include a series of application packages. The application layer runs an application by invoking an application programming interface (application programming interface, API) provided by the framework layer. As shown in FIG. 3, the application packages may include applications such as Camera, Calendar, Maps, Phone, a system interface (system UI), and Launcher. A main thread in the Launcher may be used to calculate parameters of a main card and another card in a multitask interface, and draw the another card based on the parameters of the another card, may support normal running of a home screen of the terminal device, and the like.

The framework layer provides an application programming interface (application programming interface, API) and a programming framework for the applications at the application layer. The framework layer includes some predefined functions.

As shown in FIG. 3, the framework layer may include a window manager service (window manager service), a display manager service (display manager service), Surfaceflinger, an input (input) module, and an activity manager service (ActivityManagerService, AMS). The window manager service is used to manage a window program. The window manager service may obtain a size of a display screen, determine whether there is a status bar, lock a screen, touch a screen, drag a screen, capture a screenshot, and the like. The display manager service is used to manage a display lifecycle, and the display manager service determines, based on a currently connected physical display device, how to control logical display thereof, sends a notification to a system and an application when a state changes, and the like. In some embodiments, the display manager service may further map and switch a logical screen, switch screen resolution, and the like. The Surfaceflinger is used to draw the main card based on the parameters of the main card, obtain the drawn another card, and synthesize the main card and the another card. The input module is configured to detect an operation of a user, for example, detect operations such as touching, pressing, tapping, double tapping, swiping, and dragging of the user. The AMS is the most core service in Android, and is mainly responsible for startup, switching, scheduling of a component in the system, as well as management, scheduling, and the like of an application process. For example, the AMS may be used to start a home screen component.

An objective of the HAL layer is to abstract hardware, so as to provide a unified interface for querying a hardware device for an upper-layer application, or provide a data storage service for an upper-layer application. As shown in FIG. 3, the HAL layer may include a display driver module and sensor hardware abstraction (sensor hidl). The display driver module is configured to control a display driver to display content such as a picture, an interface, and notification information on a display screen. The sensor hardware abstraction may control a sensor and listen for an event change notification of a sensor driver. A plurality of modules at the HAL layer may comply with a hardware abstraction layer interface definition language (HAL interface definition language, HIDL) or an AIDL.

The kernel layer is a layer between hardware and software. As shown in FIG. 3, the kernel layer may include one or more of the following: a sensor driver, a display driver, and the like. In this embodiment of this application, the sensor driver includes a sensor subsystem framework and a sensor subsystem driver that are located in a coprocessor (SCP).

It may be understood that the terminal device may include an application processor (application process, AP) and a coprocessor (coprocessor, CP). The application processor includes the framework layer, the hardware abstraction layer, the kernel layer, and the like. The coprocessor includes a sensor hub (sensor hub).

The hardware layer may include hardware such as a microphone, a camera, and a display screen.

It should be understood that, in some embodiments, a layer that implements a same function may be referred to as another name, or a layer that can implement functions of a plurality of layers may be used as one layer, or a layer that can implement functions of a plurality of layers may be divided into a plurality of layers. This is not limited in the embodiments of this application.

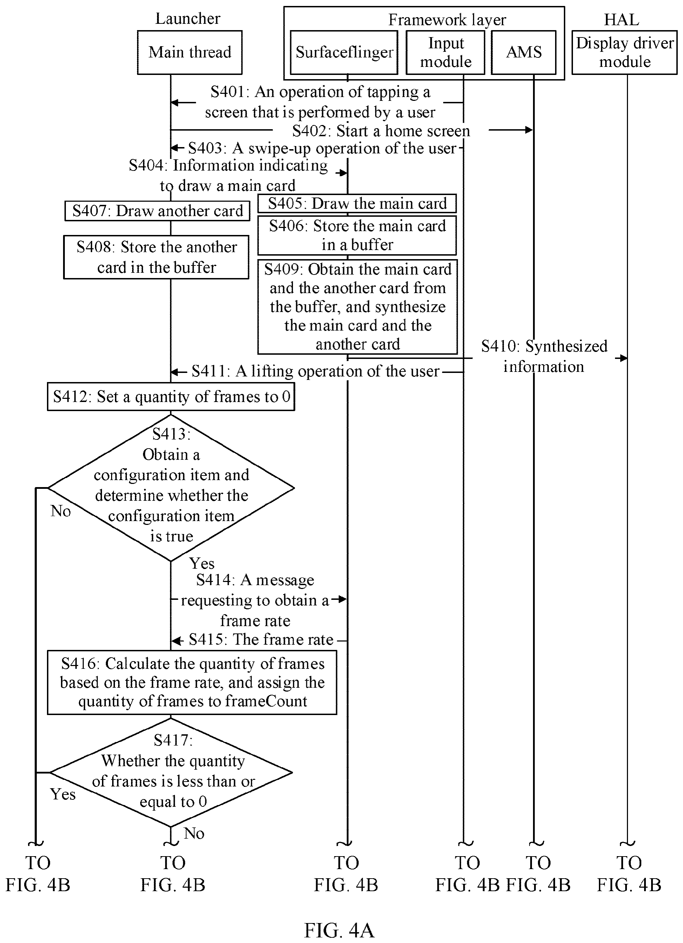

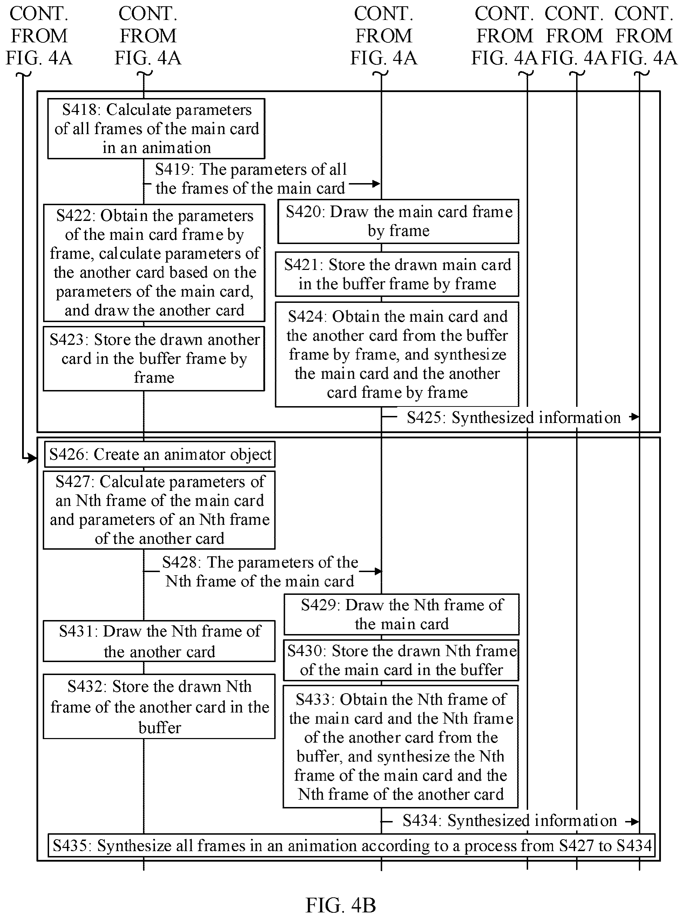

The following describes specific interaction of the modules in FIG. 3 with reference to FIG. 4A and FIG. 4B.

FIG. 4A and FIG. 4B are a schematic diagram of module interaction of a display method according to an embodiment of this application. As shown in FIG. 4A and FIG. 4B, the method may include the following steps.

S401: When a terminal device displays an interface of a first application, an input module at a framework layer transmits (or sends), in response to an operation of pressing a screen that is performed by a user, the operation of pressing a screen that is performed by the user to a main thread of Launcher.

The input module at the framework layer may include a listening mechanism, used to listen for a touch event, for example, a down event (down event), an up (up) event, and a move (move) event. The operation of pressing a screen that is performed by the user may be a down event. The input module detects the down event, and may inform the main thread of the Launcher that the input module detects the down event. The first application may be the Camera, Calendar, Maps, or Phone application shown in FIG. 3. In the example shown in FIG. 1, the interface of the first application displayed by the terminal device may be shown as the interface a in FIG. 1.

It should be noted that in this application, sending and transmission between modules are implemented by invoking a function. An invoked specific function is not limited in this embodiment of this application.

S402: The main thread may start a home screen by using an AMS.

The main thread of the Launcher may restart the home screen by using the AMS based on the down event. It may be understood that the terminal device displays the interface of the first application. In this case, the home screen is in a started state. The input module transmits the down event to the main thread. The main thread may start, based on the down event, the home screen by invoking a startActivityRecents () interface of the AMS. Start of the home screen this time may be understood as restarting the home screen.

S403: The input module transmits a swipe-up operation of the user to the main thread in response to the swipe-up operation of the user.

That the input module transmits a swipe-up operation of the user to the main thread in response to the swipe-up operation of the user may include two possible implementations. In a possible implementation, when the user swipes up, the input module transmits the swipe-up operation of the user to the main thread. In this implementation, whether transmitting the swipe-up operation of the user to the main thread by the input module is implemented based on the swipe-up operation of the user is not limited in this embodiment of this application. In another possible implementation, the input module transmits the swipe-up operation of the user to the main thread based on swipe-up of the user. In this implementation, transmitting the swipe-up operation of the user to the main thread by the input module is implemented based on the swipe-up operation of the user in this embodiment of this application.

It should be noted that the swipe-up operation of the user occurs on the basis of pressing the screen by the user. The swipe-up operation of the user may be a move event. The input module detects the move event, and may inform the main thread that the input module detects the move event.

S404: The main thread sends, to Surfaceflinger at the framework layer based on swipe-up of the user, information indicating to draw a main card (that is, a card corresponding to the first application displayed by the terminal device), and correspondingly, the Surfaceflinger receives the information indicating to draw the main card.

The main thread may invoke a draw() interface in the Surfaceflinger to indicate the Surfaceflinger to draw the main card.

S405: The Surfaceflinger draws the main card based on the information indicating to draw the main card.

The Surfaceflinger may draw, through the draw() interface, the main card based on the information indicating the draw the main card.

S406: The Surfaceflinger stores the main card in a buffer.

The Surfaceflinger may store the drawn main card in the buffer (buffer) through a queuebuffer() interface, where the buffer is a buffer at the framework (framework) layer.

S407: The main thread may draw another card based on swipe-up of the user, where the another card is a card other than the main card (that is, a card corresponding to at least one application running in a background).

A quantity of other cards is related to a quantity of applications running in the background. If one application runs in the background, the quantity of other cards is one. If a plurality of applications run in the background, the quantity of other cards is plural.

S408: The main thread may store the another card in the buffer.

The main thread may store the drawn another card in the buffer through the queuebuffer() interface. The buffer for storing the main card may be the same as the buffer for storing the another card.

S409: The Surfaceflinger may obtain the main card and the another card from the buffer, and synthesize the main card and the another card.

Because the buffer for storing the main card is the same as the buffer for storing the another card, the Surfaceflinger may obtain the main card and the another card from the buffer, and synthesize the main card and the another card.

The Surfaceflinger may obtain the main card and the another card from the buffer through a dequeuebuffer() interface, and synthesize the main card and the another card. In this case, "synthesize" means that the main card and the another card are combined without modifying the main card and the another card.

S410: The Surfaceflinger may send synthesized information to a display driver module at a HAL layer, and correspondingly, the display driver module may display the synthesized information after receiving the synthesized information.

Sending the synthesized information to the display driver module at the HAL layer by the Surfaceflinger may be understood as send for display. In an example, the Surfaceflinger may invoke a presentAndGetFrameFences() interface to send the synthesized information to the display driver module at the HAL layer.

It may be understood that the display driver module displays the synthesized information. In this case, in the example shown in FIG. 1, an interface displayed by the terminal device may be shown as the interface b in FIG. 1.

It may be further understood that in the example shown in FIG. 1, in response to a swiping operation of the user, the interface displayed by the terminal device is slowly transitioned from the interface a in FIG. 1 to the interface b in FIG. 1. This process may be referred to as a finger-following operation, that is, the interface displayed by the terminal device changes with swipe-up of the user. A specific implementation of slow transition from the interface a in FIG. 1 to the interface b in FIG. 1 may be shown as S403 to S410.

S411: The input module transmits a lifting operation of the user to the main thread in response to the lifting operation of the user.

It should be noted that the lifting operation of the user occurs on the basis of swipe-up of the user. The lifting operation of the user may be understood as an up event. The input module detects the up event, and may inform the main thread that the input module detects the up event.

If the input module detects the lifting operation of the user, it may indicate that an animation effect function of swiping up to enter multitasking is triggered.

S412: The main thread may set a value of frameCount to 0.

frameCount may be used to represent a quantity of frames included in an animation. The main thread sets the value of frameCount to 0 based on the up event, which is equivalent to assigning an initial value to frameCount.

S413: The main thread obtains a configuration item, and determines whether the configuration item is true.

The configuration item may be true (true) or false (flase). A value of the configuration item is preset in the terminal device, may be changed when a version of the terminal device is updated, and is generally not changed at another time. If the configuration item is true, an animation effect function of swiping up to enter multitasking provided in the embodiments of this application may be used. If the configuration item is flase, an existing animation effect function of swiping up to enter multitasking may be used. For ease of differentiation, the animation effect function of swiping up to enter multitasking provided in the embodiments of this application is referred to as an animation effect sink function of swiping up to enter multitasking.

For example, the main thread may invoke a localAnemationEnabled() interface to obtain the configuration item, and determine whether the configuration item is true.

S414: If the configuration item is true, the main thread may send a message requesting to obtain a frame rate to the Surfaceflinger, and correspondingly, the Surfaceflinger receives the message requesting to obtain a frame rate.

A value of the frame rate may be the same as a screen refresh rate of the terminal device. Before performing the animation effect sink function of swiping up to enter multitasking, the main thread needs to calculate a quantity of displayed frames, and the quantity of frames is related to the frame rate. Therefore, the main thread may obtain the frame rate from the Surfaceflinger first, that is, send the message requesting to obtain a frame rate to the Surfaceflinger, to obtain the frame rate.

For example, the main thread may obtain the frame rate from the Surfaceflinger through a getAGPFrameRate() interface.

S415: The Surfaceflinger sends the frame rate to the main thread based on the message requesting to obtain a frame rate, and correspondingly, the main thread receives the frame rate.

The Surfaceflinger may store and update the screen refresh rate of the terminal device, and the value of the screen refresh rate of the terminal device is the same as that of the frame rate. Therefore, a current screen refresh rate may be sent to the main thread based on the message requesting to obtain a frame rate. If the terminal device is not in a screen projection or screen recording scenario, the screen refresh rate of the terminal device stored in the Surfaceflinger is greater than 0. If the terminal device is in a screen projection or screen recording scenario, the screen refresh rate stored in the Surfaceflinger is -1.

S416: The main thread calculates a quantity of frames based on the frame rate, and assigns the quantity of frames to frameCount.

The frame rate may be represented by a symbol refreshRate or frameRate, and a unit of the frame rate is generally frames/second (frames per second, fps). The quantity of frames may be represented by a symbol frameCount.

A time for displaying one frame may be represented by a symbol frameDuration, where frameDuration=1/refreshRate or frameDuration=1/refreshRate. In this case, a unit of frameDuration is second, and a data type may be int (int) or float (float). If the unit of frameDuration is millisecond, frameDuration=1000*1.0/refreshRate or frameDuration=1000*1.0/frameRate, where the data type of frameDuration is float. If total duration for animation display in the animation effect sink function of swiping up to enter multitasking is represented by a symbol duration, a quantity of frames that can be displayed within the total duration = the total duration/the time for displaying one frame, that is, frameCount=duration*1.0/frameDuration, where a data type of frameCount is float. The main thread may assign the quantity of frames to frameCount, that is, the value of frameCount is equal to the quantity of frames.

For example, when the terminal device is not in the screen projection or screen recording scenario, if the frame rate is frameRate=60 fps, the time for displaying one frame is frameDuration=1000*1.0/60 milliseconds, and if the total duration for animation display is duration=100 milliseconds, the quantity of frames is frameCount=100*1.0/(1000*1.0/60) =6. It can be learned that animation display in the animation effect sink function of swiping up to enter multitasking may be six frames. When the terminal device is in the screen projection or screen recording scenario, if the frame rate is -1, the time for displaying one frame is frameDuration =1000*1.0/(-1) milliseconds=-1000 milliseconds. It may indicate that there is no frame, and frameCount=0. In this case, the terminal device does not perform animation display.

S417: The main thread determines whether frameCount is less than or equal to 0.

If the value of frameCount is greater than 0, the animation effect sink function of swiping up to enter multitasking provided in the embodiments of this application may be used. If frameCount is less than or equal to 0, it indicates that the terminal device may be in the screen projection or screen recording scenario. If the animation effect sink function of swiping up to enter multitasking provided in the embodiments of this application is used, frameCount is less than or equal to 0, it indicates that there is no frame, resulting in no animation. Therefore, the existing animation effect function of swiping up to enter multitasking may be used. In this implementation, frameCount is less than or equal to 0, and animation display is not affected, thereby facilitating normal display of an animation of the main card on the terminal device in the screen projection or screen recording scenario, and reducing a probability of no animation of the main card in the screen projection or screen recording scenario.

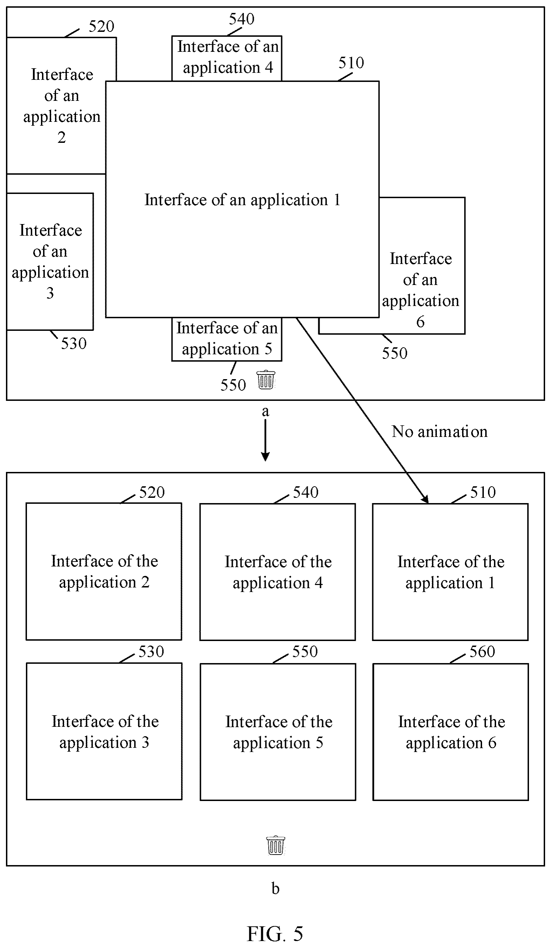

For example, if the animation effect sink function of swiping up to enter multitasking provided in the embodiments of this application is used, frameCount is less than or equal to 0, it indicates that there is no frame, resulting in no animation. FIG. 5 is a schematic diagram of not displaying an animation of a main card. As shown in FIG. 5, the terminal device may be a tablet computer. The tablet computer detects an operation of pressing a screen and swiping up that is performed by a user, and may display a multitask interface in response to the operation of pressing a screen and swiping up that is performed by the user. As shown in an interface a in FIG. 5, the multitask interface displays a card 510 corresponding to an application 1, a card 520 corresponding to an application 2, a card 530 corresponding to an application 3, a card 540 corresponding to an application 4, a card 550 corresponding to an application 5, and a card 560 corresponding to an application 6. The card 510 corresponding to the application 1 is a main card, and the cards corresponding to the other applications are other cards. The tablet computer detects a lifting operation of the user, that is, detects an animation effect of swiping up to enter multitasking. In response to the lifting operation of the user, it is detected that the tablet computer is in a screen projection or screen recording state, that is, a value of frameCount is less than or equal to 0. Then, an animation of the main card (that is, the card 510 corresponding to the application 1) is not displayed, that is, a process of moving the main card is not displayed, but a specific position of the main card in the multitask interface is directly displayed, as shown in an interface b in FIG. 5. In this process, it may be found by checking a thread running diagram that there is no thread running in the Surfaceflinger within a time for animation display.

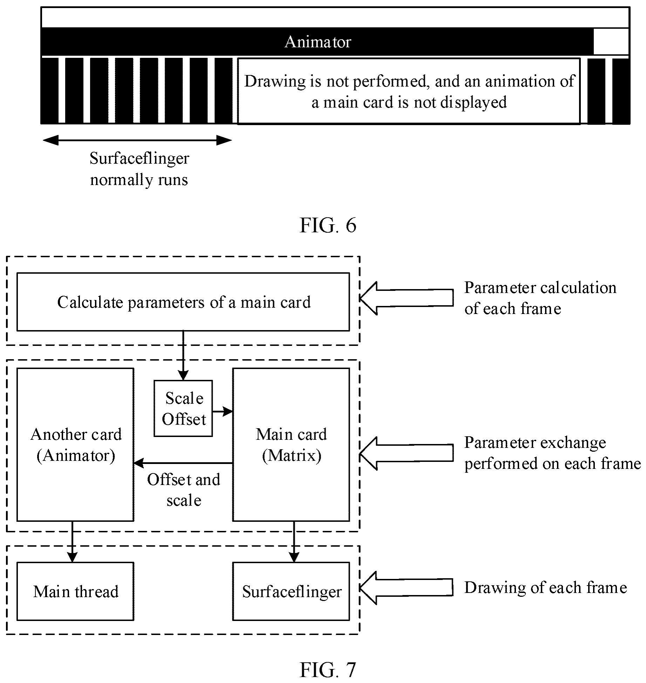

FIG. 6 is a schematic diagram of thread running. As shown in FIG. 6, a thread of the Surfaceflinger may normally run when the tablet computer displays the interface a in FIG. 5. After the lifting operation of the user is detected, it is detected in response to the lifting operation of the user that the value of frameCount is less than or equal to 0. The main thread of the tablet computer invokes an animator interface to calculate parameters of the main card in an animation process, but a part of the Surfaceflinger is empty, that is, obtained data (the parameters of the main card) is empty. In this case, drawing cannot be performed, and therefore the animation of the main card is not displayed, and the interface b in FIG. 5 is directly displayed.

If frameCount is less than or equal to 0, the existing animation effect function of swiping up to enter multitasking may be used, that is, S426 to S435 are performed. If frameCount is greater than 0, the animation effect sink function of swiping up to enter multitasking provided in the embodiments of this application may be used, that is, S418 to S425 are performed.

For example, if the animation effect sink function of swiping up to enter multitasking provided in the embodiments of this application is implemented through a doSwipeEnterMultiSurfaceSkinAnim(frameCount) interface, the existing animation effect function of swiping up to enter multitasking is implemented through an animator.play(windowAnim) interface. Then, a code implementation may be represented as:

```
if(frameCount>0){
doSwipeEnterMultiSurfaceSkinAnim (frameCount);
 }else if(windowAnim!=null) {
animator.play(windowAnim);
 }
```

That is, if frameCount is greater than 0, the doSwipeEnterMultiSurfaceSkinAnim(frameCount) interface is invoked to implement the animation effect sink function of swiping up to enter multitasking provided in the embodiments of this application; and if frameCount is less than or equal to 0, the animator.play(windowAnim) interface is invoked to implement the existing animation effect function of swiping up to enter multitasking.

S418: If frameCount is greater than 0, the main thread calculates parameters of all frames of the main card in an animation.

If frameCount is greater than 0, it may indicate that the terminal device is not in the screen projection or screen recording scenario. The main thread may calculate the parameters of all the frames of the main card in the animation through a getRecentsAnimdata() interface, and store the parameters of all the frames of the main card through an Animdata interface.

For example, if the animation includes 40 frames of the main card, the main thread may calculate parameters of each of the 40 frames of the main card through the getRecentsAnimdata() interface. The parameters of each frame of the main card may include an animation progress (animatedFraction), an animation play rate (catualInterpolator), an interpolator (FractionAfterInterpolation), and surface parameters of the frame (surfaceParams). The animation progress is used to represent a time from a first frame of the animation, and the interpolator is used to represent a change process of calculating the animation. The surface parameters of the frame may include a matrix and a cropping value, where the matrix (mTmpMatrix) is used to represent content and a position of the frame, and the cropping value (mTmpRect) is used to represent a scale of the frame.

It should be noted that calculation of the parameters of all the frames of the main card in the animation by the main thread may be an example. In another example, the main thread may calculate parameters of at least two frames of the main card in the animation.

S419: The main thread sends the parameters of all the frames of the main card to the Surfaceflinger, and correspondingly, the Surfaceflinger receives the parameters of all the frames of the main card.

The main thread may obtain the parameters of all the frames of the main card through the Animdata interface, and send the parameters of all the frames of the main card to the Surfaceflinger.

For example, the main thread may send a quantity of all frames of the main card to the Surfaceflinger through a SurfaceControlEx.setAnimFrameNum() interface, and send a matrix matrixArr corresponding to all the frames to the Surfaceflinger through a SurfaceControlEx.setAnimMatrix() interface, where the matrix matrixArr includes the content of all the frames. The main thread may further send a corner radius value of the main card to the Surfaceflinger through a SurfaceControlEx.setCornerRadiusArray() interface, send the cropping value of the main card to the Surfaceflinger through a SurfaceControlEx.setWindowCropArray() interface, and send a current animation state to the Surfaceflinger through a SurfaceControlEx.setAnimState() interface.

S420: The Surfaceflinger draws the main card frame by frame based on the parameters of all the frames of the main card.

That the Surfaceflinger draws the main card frame by frame may be understood as that the Surfaceflinger draws the main card frame by frame according to a sequence of storing the parameters of all the frames of the main card in the buffer, that is, according to a rule that a frame whose parameters are stored first is drawn first. That the Surfaceflinger draws the main card frame by frame may alternatively be understood as that the main card is drawn frame by frame according to an animation display sequence. In an example, the Surfaceflinger may draw the main card frame by frame through the draw() interface.

S421: The Surfaceflinger stores the drawn main card in the buffer frame by frame.

After drawing one frame of the main card, the Surfaceflinger may store the frame of the main card in the buffer until all the drawn frames of the main card are stored in the buffer. The Surfaceflinger may store the drawn main card in the buffer through the queuebuffer() interface frame by frame.

S422: The main thread may further obtain the parameters of the main card frame by frame based on the calculated parameters of all the frames of the main card, calculate parameters of another card based on the parameters of the main card, and draw the another card.

It may be understood that a position of the another card is related to a position of the main card. When the another card is drawn, the parameters of the main card need to be determined. Therefore, the main thread may obtain parameters of a first frame of the main card, calculate parameters of a first frame of the another card based on the parameters of the first frame of the main card, and draw the first frame of the another card; and then obtain parameters of a second frame of the main card, calculate parameters of a second frame of the another card based on the parameter of the second frame of the main card, and draw the second frame of the another card. This process is repeated until all frames of the another card in the animation are drawn.

The parameters of the another card may include the parameters of the main card. For example, if the parameters of the first frame of the main card include scaling down by 2%, the parameters of the first frame of the another card may also include scaling down by 2%. If the parameters of the first frame of the main card include moving 3 millimeters to the right, the parameters of the first frame of the another card may also include moving 3 millimeters to the right.

S423: The main thread stores the another card in the buffer frame by frame. The Surfaceflinger may store the drawn another card in the buffer through the queuebuffer() interface.

S424: The Surfaceflinger may obtain the main card and the another card from the buffer frame by frame, and synthesize the main card and the another card.

The Surfaceflinger may obtain the main card and the another card from the buffer through the dequeuebuffer() interface according to a sequence of storing the frames of the main card and the another card in the buffer, that is, according to a rule that a frame stored first is drawn first, and synthesize the main card and the another card. In this case, "synthesize" means that the main card and the another card are combined without modifying the main card and the another card.

S425: The Surfaceflinger may send synthesized information to the display driver module, and correspondingly, the display driver module may display the synthesized information after receiving the synthesized information.

The display driver module may display the synthesized information frame by frame to form the animation. A last image frame may be shown as the interface d in FIG. 1.

S426: If the configuration item is false or frameCount is less than or equal to 0, the main thread creates an animator (animator) object.

The main thread creates the animator object and implements the animation process by using the animator object and the Surfaceflinge.

S427: The main thread calculates parameters of an Nth frame of the main card and parameters of an Nth frame of the another card.

The parameters of the Nth frame of the main card are used to represent parameters required for displaying any frame of the main card in the animation. The parameters of the Nth frame of the another card are used to represent parameters required for any frame of the another card in the animation. The main thread may calculate the parameters of the Nth frame of the main card and the parameters of the Nth frame of the another card by invoking an addUpdateListener interface in windowAnim.strart().

It should be noted that the main thread may calculate parameters of any frame of the main card and parameters of any frame of the another card by invoking the addUpdateListener interface in windowAnim.strart(). The parameters of any frame of the main card and the parameters of any frame of the another card may include an animation progress (animatedFraction), an animation play rate (catualInterpolator), an interpolator (FractionAfterInterpolation), and surface parameters of the frame (surfaceParams). The animation progress is used to represent a time from a first frame of the animation, and the interpolator is used to represent a change process of calculating the animation. The surface parameters of the frame may include a matrix and a cropping value, where the matrix (mTmpMatrix) is used to represent content and a position of the frame, and the cropping value (mTmpRect) is used to represent a scale of the frame.

S428: The main thread sends the parameters of the Nth frame of the main card to the Surfaceflinger, and correspondingly, the Surfaceflinger receives the parameters of the Nth frame of the main card.

S429: The Surfaceflinger draws the Nth frame of the main card based on the parameters of the Nth frame of the main card.

The Surfaceflinger may draw the Nth frame of the main card in the animation through the draw() interface, or the main thread invokes the draw() interface in the Surfaceflinger to draw the Nth frame of the main card based on the parameters of the Nth frame of the main card.

S430: The Surfaceflinger stores the Nth frame of the main card in the buffer.

The Surfaceflinger may store the drawn Nth frame of the main card in the buffer through the queuebuffer() interface.

S431: The main thread may draw the Nth frame of the another card based on the parameters of the Nth frame of the another card.

S432: The main thread may store the drawn Nth frame of the another card in the buffer.

The main thread may store the drawn Nth frame of the another card in the buffer through the queuebuffer() interface.

S433: The Surfaceflinger may obtain the Nth frame of the main card and the Nth frame of the another card from the buffer, and synthesize the Nth frame of the main card and the Nth frame of the another card.

The Surfaceflinger may obtain the Nth frame of the main card and the Nth frame of the another card from the buffer through the dequeuebuffer() interface, and synthesize the Nth frame of the main card and the Nth frame of the another card. In this case, "synthesize" means that the Nth frame of the main card and the Nth frame of the another card are combined without modifying the Nth frame of the main card and the Nth frame of the another card.

S434: The Surfaceflinger may send synthesized information to the display driver module, and correspondingly, the display driver module may display the synthesized information after receiving the synthesized information.

It may be understood that the synthesized information is an Nth frame of the animation. Sending the synthesized information to the display driver module by the Surfaceflinger may be understood as send for display. In an example, the Surfaceflinger may invoke the presentAndGetFrameFences() interface to send the synthesized information to the display driver module.

S435: Synthesize all frames in an animation according to a process from S427 to S434.

The display driver module may display all the frames in the synthesized animation to form the animation. A last image frame may be shown as the interface d in FIG. 1.

It can be learned from the method shown in FIG. 4A and FIG. 4B that S418 to S425 are performed when the configuration item is true and the value of frameCount is greater than 0, that is, the animation effect sink function of swiping up to enter multitasking provided in the embodiments of this application is used; and S426 to S435 are performed when the configuration item is flase or the configuration item is true and the value of frameCount is less than or equal to 0, that is, the existing animation effect function of swiping up to enter multitasking is used.

According to the display method provided in this embodiment of this application, when the animation effect function of swiping up to enter multitasking is performed, the configuration item is true and frameCount is greater than 0, and the main thread calculates the parameters of the main card in the animation, the parameters of all the frames of the main card in the animation may be calculated at once, the parameters of all the frames of the main card are sent to the Surfaceflinger, and the Surfaceflinger draws the main card frame by frame based on the parameters of all the frames of the main card, instead of having the main thread calculate parameters of one frame of the main card and the Surfaceflinger draw the frame of the main card. In this way, the Surfaceflinger may obtain the parameters of all the frames of the main card in the animation when performing drawing, thereby drawing all the frames of the main card in the animation, and helping reduce a frame loss or stuttering of the main card that is caused by a failure of the main thread in calculating the parameters of the main card due to an excessively large load in the animation process. In addition, when the another card in the animation is drawn, the main thread calculates parameters of one frame of the another card based on parameters of one frame of the main card, and draws the frame of the another card based on the parameters of the frame of the another card. Calculation and drawing performed frame by frame facilitate proper arrangement of display positions of the main card and the another card in each frame, thereby avoiding position crossing or overlapping, and facilitating synchronization of the main card and the another card. In addition, in the screen recording or screen projection scenario, when frameCount is less than or equal to 0, the main thread calculates the parameters of one frame of the main card and the Surfaceflinger draws the frame of the main card, thereby facilitating display of the animation of the main card, and reducing a probability of no animation of the main card.

The method shown in FIG. 4A and FIG. 4B is applicable in a scenario in which the terminal device displays an interface of an application, and at least one application runs in the background of the terminal device. If the terminal device displays an interface of an application, but there is no application running in the background, steps related to the another card are removed from the method shown in FIG. 4A and FIG. 4B, so that the method can be also applicable.

The foregoing describes the method provided in the embodiments of this application in detail from a software interaction level, and the following describes the method provided in the embodiments of this application from a function implementation level.

1. Existing animation effect function of swiping up to enter multitasking

The existing animation effect function of swiping up to enter multitasking refers to S426 to S435 in FIG. 4A and FIG. 4B. According to the existing animation effect function of swiping up to enter multitasking, when the animation is displayed, the main thread may calculate parameters of each frame of the main card and parameters of each frame of the another card, the Surfaceflinger may draw each frame of the main card and each frame of the another card based on the parameters of each frame of the main card and the parameters of each frame of the another card. In other words, parameters of one frame are calculated to draw the frame. This process is repeated until all frames of the main card and the another card in the animation are drawn.

For example, FIG. 7 is a schematic diagram of an animation display process. As shown in FIG. 7, when the terminal device performs the animation effect function of swiping up to enter multitasking, the main thread of the terminal device may calculate the parameters of each frame of the main card in the animation by using an animator, where the parameters of the main card may be represented by a matrix Matrix, and the matrix Matrix may include parameters such as horizontal offset, vertical offset, and a scale of the main card. In an example, the animator may calculate the horizontal offset (offsetX) of the main card by using timePassed=AnimationUtils.currentAnimationTimeMillis()-mStartTime, and calculate the scale (scale) and the vertical offset (offsetY) of the main card based on the horizontal offset (offsetX).

The main thread of the terminal device may obtain the parameters of each frame of the main card in the animation by using the animator, calculate the parameters of each frame of the another card based on the parameters of each frame of the main card, and draw each frame of the another card based on the parameters of each frame of the another card. The Surfaceflinger of the terminal device may draw each frame of the main card based on the parameters of each frame of the main card. The main thread and the Surfaceflinger may implement synchronous drawing to achieve synchronization of the main card and the another card.

2. Animation effect sink function of swiping up to enter multitasking provided in the embodiments of this application

The animation effect sink function of swiping up to enter multitasking provided in the embodiments of this application refers to S418 to S425 in FIG. 4A and FIG. 4B. According to the animation effect sink function of swiping up to enter multitasking provided in the embodiments of this application, when the animation is displayed, the main thread may calculate the parameters of all the frames of the main card in the animation process at once, obtain the parameters of the main card frame by frame, and calculate the parameters of the another card based on the parameters of the main card. The main thread may draw each frame of the another card based on parameters of each frame of the another card. The Surfaceflinger may obtain the parameters of all the frames of the main card in the animation process from the main thread, and draw each frame of the main card based on parameters of each frame of the main card.

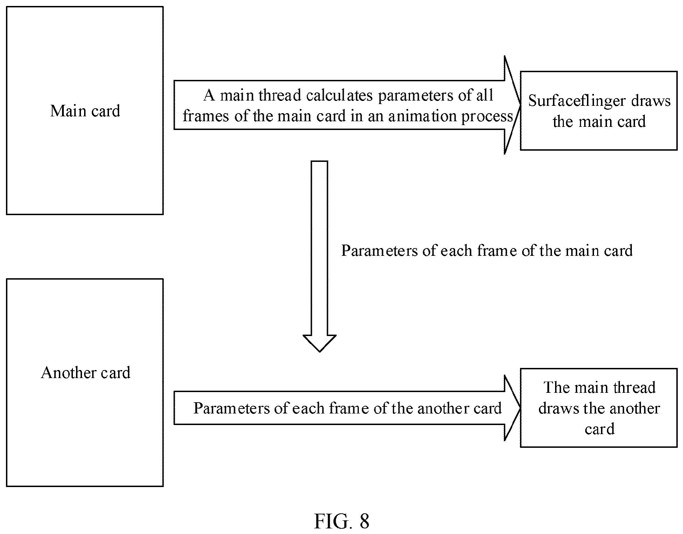

For example, FIG. 8 is a schematic diagram of an animation display process. As shown in FIG. 8, when the terminal device performs the animation effect function of swiping up to enter multitasking, the main thread of the terminal device calculates the parameters of all the frames of the main card in the animation process, and the Surfaceflinger of the terminal device may obtain the parameters of all the frames of the main card in the animation process from the main thread, and draw each frame of the main card based on the parameters of each frame of the main card. In addition, the main thread of the terminal device may obtain the parameters of each frame of the main card, calculate the parameters of each frame of the another card based on the parameters of each frame of the main card, and draw each frame of the another card based on the parameters of each frame of the another card.

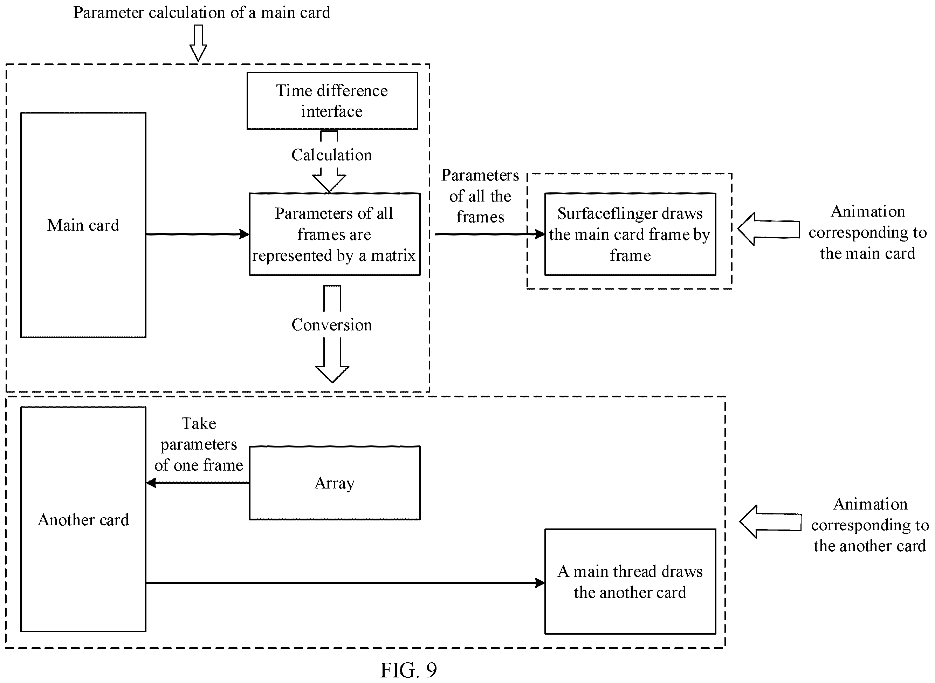

A specific calculation process may be shown in FIG. 9. The main thread may calculate the horizontal offset (offsetX) of the main card through a time difference interface, for example, a timePassed() interface, to further calculate the parameters of all the frames of the main card. In an example, timePassed=num*(1000*1.0/frameRate), where num is used to represent which frame the animation has reached, and frameRate is used to represent the frame rate. The main thread may represent the parameters of all the frames of the main card in the animation process in a matrix form. The main thread may send the parameters of all the frames of the main card to the Surfaceflinger, and the Surfaceflinger may receive the parameters of all the frames of the main card, obtain the parameters of the main card frame by frame, and draw the main card frame by frame. It should be noted that timePassed() is redefined in the embodiments of this application, and is calculated in a manner different from an existing calculation manner.

The main thread may convert the parameters of all the frames of the main card in the animation process from the matrix form to an array form, take parameters of one frame of the main card each time, calculate parameters of one frame of the another card based on the parameters of the frame of the main card, and draw the frame of the another card. This process is repeated until all the frames of the another card are drawn.

To better understand calculation and drawing of the main card and the another card, the following describes calculation and drawing of the main card and the another card in detail.

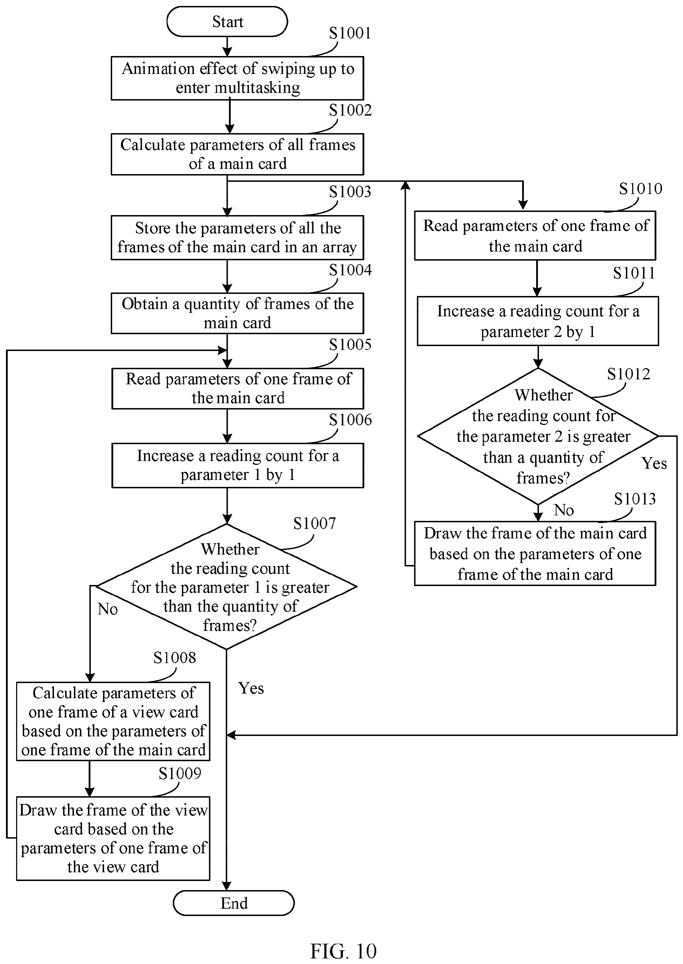

FIG. 10 is a schematic flowchart of calculation and drawing of a main card and another card. A method shown in FIG. 10 may be applied to a terminal device. As shown in FIG. 10, the method includes the following steps.

S1001: The terminal device detects an animation effect of swiping up to enter multitasking.

The terminal device detects the animation effect of swiping up to enter multitasking, that is, a subsequent animation execution process. For example, in the example shown in FIG. 1, the terminal device detects the animation effect of swiping up to enter multitasking. In this case, a displayed interface is the interface b in FIG. 1.

In the method shown in FIG. 4A and FIG. 4B, the terminal device has performed S401 to S416.

S1002: The terminal device may calculate parameters of all frames of a main card in an animation process by using a main thread.

The terminal device may invoke a timePassed() interface by using the main thread, to calculate a horizontal offset of the main card, and further calculate the parameters of all the frames of the main card. In an example, the parameters of all the frames of the main card may be stored in a matrix form.

This step is the same as S418. Details are not described herein.

S1003: The terminal device may store the parameters of all the frames of the main card in an array by using the main thread.

If the parameters of all the frames of the main card are stored in the matrix form, the terminal device may convert the matrix form to the array by using the main thread.

S1004: The terminal device may obtain a quantity of frames of the main card by using the main thread.

The quantity of frames of the main card is a quantity of frames of the main card that can be displayed in the animation process. If the quantity of frames of the main card is already calculated by the terminal device, the quantity of frames may be directly obtained. It can be learned from the procedure shown in FIG. 4A and FIG. 4B that, previous to this, the quantity of frames of the main card is already calculated in S416. Therefore, the quantity of frames of the main card may be directly obtained herein.

S1005: The terminal device may read parameters of one frame of the main card from the array by using the main thread.

The terminal device may read the parameters of the main card frame by frame from the array by using the main thread.

S1006: The terminal device may increase a reading count for a parameter 1 by 1 by using the main thread.

The reading count for the parameter 1 is used to represent a reading count for the parameters of the main card from the array. An initial value may be 0. Once the parameters of one frame of the main card are read from the array, the reading count for the parameter 1 is increased by 1.

S1007: The terminal device may determine, by using the main thread, whether the reading count for the parameter 1 is greater than the quantity of frames of the main card.

If the reading count for the parameter 1 is greater than the quantity of frames of the main card, it indicates that the parameters of all the frames of the main card are read. If the reading count for the parameter 1 is less than or equal to the quantity of frames of the main card, it indicates that the parameters of all the frames of the main card are not read. If the reading count for the parameter 1 is greater than the quantity of frames of the main card, the method may be ended. If the reading count for the parameter 1 is less than or equal to the quantity of frames of the main card, parameters of one frame of another card may be calculated based on the parameters of one frame of the main card, that is, S1008 may be performed.

S1008: The terminal device may calculate parameters of one frame of another card based on the parameters of one frame of the main card by using the main thread.

S1009: The terminal device may draw the frame of the another card based on the parameters of one frame of the another card by using the main thread.

After the terminal device draws the frame of the another card by using the main thread, the terminal device may continue to read parameters of one frame of the main card, that is, S1005 may be performed, until the reading count for the parameter 1 is greater than the quantity of frames of the main card.

S1004 to S1009 constitute a specific implementation of S422 in FIG. 4A and FIG. 4B.

S1010: The terminal device may send, to Surfaceflinger, the parameters that are of all the frames of the main card in the animation process and that are calculated by the main thread, and the Surfaceflinger reads parameters of one frame of the main card from the parameters of all the frames of the main card.

S1010 is after S1002 and S1003 is after S1002. An execution sequence of S1010 and S1003 is not limited in this embodiment of this application.

The terminal device may transmit the parameters of all the frames of the main card to the Surfaceflinger by using the main thread, and the Surfaceflinger reads the parameters of one frame of the main card from the parameters of all the frames of the main card.

S1011: The terminal device may increase a reading count for a parameter 2 by 1 by using the Surfaceflinger.

The reading count 2 for the parameter is used to represent a reading count for the parameters of the main card. An initial value may be 0. Once the parameters of one frame of the main card are read, the reading count for the parameter 2 is increased by 1.

S1012: The terminal device may determine, by using the Surfaceflinger, whether the reading count for the parameter 2 is greater than a quantity of frames of the main card.

If the reading count for the parameter 2 is greater than the quantity of frames of the main card, it indicates that the parameters of all the frames of the main card are read. If the reading count for the parameter 2 is less than or equal to the quantity of frames of the main card, it indicates that the parameters of all the frames of the main card are not read. If the reading count for the parameter 2 is greater than the quantity of frames of the main card, the method may be ended. If the reading count for the parameter 2 is less than or equal to the quantity of frames of the main card, one frame of the main card may be drawn based on the parameters of one frame of the main card, that is, S1013 is performed.

S1013: The terminal device may draw the frame of the main card based on the parameters of one frame of the main card by using the Surfaceflinger.

After the terminal device draws the frame of the main card by using the Surfaceflinger, the terminal device may continue to read parameters of one frame of the main card from the parameters of all the frames of the main card, that is, S1010 is performed, until the reading count for the parameter 2 is greater than the quantity of frames of the main card.

S1010 to S1013 constitute a specific implementation of S419 to S420 in FIG. 4A and FIG. 4B.

It may be understood that S1001 to S1009 are implemented by the terminal device by using the main thread, and S1010 to S1013 are implemented by the terminal device by using the Surfaceflinger.

In this implementation, the terminal device calculates the parameters of all the frames of the main card in the animation process by using the main thread at once, and sends the parameters that are of all the frames of the main card and that are calculated by the main thread to the Surfaceflinger, and the Surfaceflinger performs drawing frame by frame, instead of having the main thread calculate the parameters of one frame of the main card and the Surfaceflinger draw the frame of the main card. In this way, the Surfaceflinger may obtain the parameters of all the frames of the main card in the animation process when performing drawing, thereby drawing all the frames of the main card in the animation process, and helping reduce a frame loss or stuttering that is caused by a failure of the main thread in calculating the parameters of the main card due to an excessively large load in the animation process. In addition, when the another card is drawn, the main thread calculates parameters of one frame of the another card based on parameters of one frame of the main card, and draws the frame of the another card based on the parameters of the frame of the another card. Calculation and drawing performed frame by frame facilitate proper arrangement of display positions of the main card and the another card, thereby avoiding position crossing or overlapping, and facilitating synchronization of the main card and the another card.

In addition, to distinguish between the existing animation effect function of swiping up to enter multitasking and the animation effect sink function of swiping up to enter multitasking provided in the embodiments of this application, the terminal device may set a flag when performing the animation effect sink function of swiping up to enter multitasking provided in the embodiments of this application. If the flag exists in the animation display process of the terminal device, it indicates that the terminal device performs the animation effect sink function of swiping up to enter multitasking provided in the embodiments of this application. If the flag does not exist in the animation display process of the terminal device, it indicates that the terminal device performs the existing animation effect function of swiping up to enter multitasking.

For example, the flag may be a SetsurfaceflingerAnimation thread. If the terminal device invokes the SetsurfaceflingerAnimation thread in the animation display process, it indicates that the terminal device performs the animation effect sink function of swiping up to enter multitasking provided in the embodiments of this application. If the terminal device does not invoke the SetsurfaceflingerAnimation thread in the animation display process, it indicates that the terminal device performs the existing animation effect function of swiping up to enter multitasking.

The SetsurfaceflingerAnimation thread may be a thread in Setsurfaceflinger. The thread is a custom method in this application, that is, a preset method, and various attribute values of a layer may be set before drawing starts. If the terminal device performs the animation effect sink function of swiping up to enter multitasking provided in the embodiments of this application, the SetsurfaceflingerAnimation thread in Setsurfaceflinger may be invoked before the drawing thread is invoked.

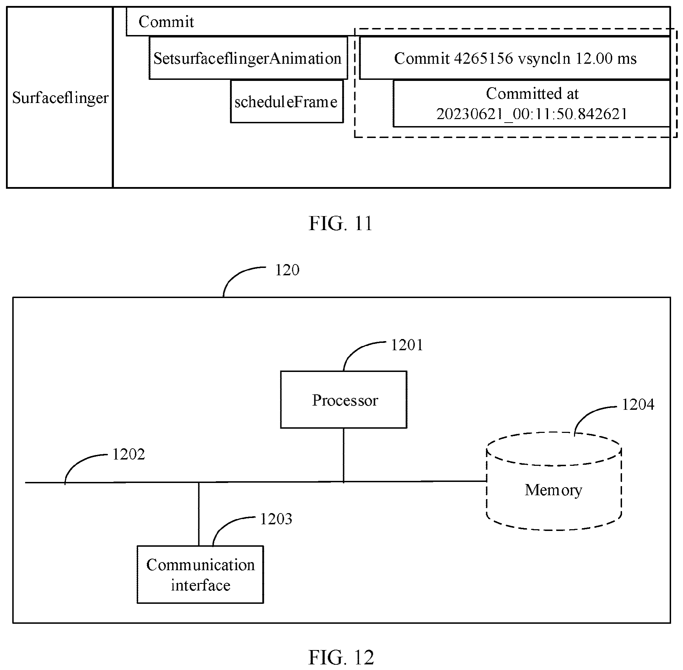

For example, FIG. 11 is a schematic diagram of thread running. As shown in FIG. 11, in the animation display process, the terminal device invokes a SetsurfaceflingerAnimation (SetsurfaceflingerAnimation) thread to set various attribute values of the layer before drawing starts, requests a vertical synchronization (vetical synchronization, vsync) signal once by using a scheduleFrame thread, and uses a commit (commit) thread at a dashed box to perform single graphic data drawing and preprocessing and record a drawing start time.

The foregoing describes the method provided in the embodiments of this application from the function implementation level, and the following describes in detail the method provided in the embodiments of this application from a thread aspect.

An embodiment of this application provides a display method. The method may be applied to a terminal device. The method includes: displaying an interface of a first application when a screen projection or screen recording function of the terminal device is not enabled; receiving an operation of pressing and swiping up that is performed by a user, and displaying, in response to a lifting operation performed by the user, a first animation after a first time point and before a second time point, where a preset thread of Surfaceflinger is invoked first and a drawing thread is then invoked after the first time point, and the second time point is after the first time point; displaying a multitasking interface at the second time point; after the second time point, enabling the screen recording or screen projection function of the terminal device, and displaying the interface of the first application; receiving the operation of pressing and swiping up that is performed by the user, and displaying, in response to the lifting operation performed by the user, the first animation after a third time point and before a fourth time point, where the preset thread is not invoked after the third time point and before the drawing thread is invoked, and the fourth time point is after the third time point; and displaying the multitasking interface at the fourth time point.

The first application may be a Messages application, a Settings application, a chat application, or the like. The operation of pressing and swiping up that is performed by the user may also be referred to as an operation of pressing and swiping up that is performed by the user. This is not limited in the embodiments of this application. The multitasking interface is the multitask interface in the foregoing embodiments. A name of the interface is not specifically limited in the embodiments of this application.

In the example shown in FIG. 1, the interface of the first application may be the interface a in FIG. 1. In the example shown in FIG. 1, the multitasking interface may be the interface b in FIG. 1. In the example shown in FIG. 1, the first animation is a process in which the interface b in FIG, 1 is transitioned from the interface c in FIG. 1 to the interface d in FIG. 1.

That a screen projection or screen recording function of the terminal device is not enabled may be understood as that the terminal device is in a non-screen projection and non-screen recording scenario. The first animation is displayed after the first time point and before the second time point, and the second time point is after the first time point, it may indicate that display duration of the first animation is a time difference between the second time point and the first time point. The multitasking interface is displayed at the second time point, it may indicate that a last frame of the first animation is the multitasking interface. In a process of displaying the first animation, the preset thread of the Surfaceflinger is invoked first and the drawing thread is then invoked, it may indicate that, when the screen projection or screen recording function of the terminal device is not enabled, the terminal device uses an animation effect sink function of swiping up to enter multitasking provided in embodiments of this application in a specific embodiment.

That the screen recording or screen projection function of the terminal device is enabled may be understood as that the terminal device is in a screen projection or screen recording scenario. The first animation is displayed after the third time point and before the fourth time point, and the fourth time point is after the third time point, it may indicate that display duration of the first animation is a time difference between the fourth time point and the third time point. The multitasking interface is displayed at the fourth time point, it may indicate that a last frame of the first animation is the multitasking interface. In a process of displaying the first animation, the preset thread is not invoked before the drawing thread is invoked, it may indicate that, when the screen projection or screen recording function of the terminal device is enabled, the terminal device uses an existing animation effect function of swiping up to enter multitasking in a specific embodiment.

The preset thread may be a predefined thread. In the example shown in FIG. 11, the preset thread may be SetsurfaceflingerAnimation.

In this way, in the process of displaying the first animation when the screen projection or screen recording function of the terminal device is not enabled, the preset thread of the Surfaceflinger is invoked first and the drawing thread is then invoked, to use the animation effect sink function of swiping up to enter multitasking provided in the embodiments of this application in a specific embodiment, thereby helping avoid a frame loss or stuttering. In the process of displaying the first animation when the screen projection or screen recording function of the terminal device is enabled, the preset thread is not invoked before the drawing thread is invoked, to use the existing animation effect function of swiping up to enter multitasking in a specific embodiment, thereby helping reduce a probability of no animation.

Optionally, the method further includes: further invoking a frame rate obtaining thread after the first time point and before the second time point and before the drawing thread is invoked; and not invoking the frame rate obtaining thread after the third time point and before the fourth time point.

In the method shown in FIG. 4A and FIG. 4B, the main thread of the terminal device may obtain a frame rate from the Surfaceflinger, and the used frame rate obtaining thread may be getAGPFrameRate(). The terminal device may invoke the frame rate obtaining thread, for example, getAGPFrameRate(), to obtain the frame rate after the first time point and before the second time point, to calculate a quantity of frames included in the first animation, and further invoke the preset thread of the Surfaceflinger and invoke the drawing thread.

The frame rate obtaining thread, the preset thread, and the drawing thread are invoked in the process of displaying the first animation after the first time point and before the second time point, it may indicate that, when the screen projection or screen recording function of the terminal device is not enabled, the terminal device uses the animation effect sink function of swiping up to enter multitasking provided in the embodiments of this application in a specific embodiment.

The frame rate obtaining thread and the preset thread are not invoked but the drawing thread is invoked in the process of displaying the first animation after the third time point and before the fourth time point, it may indicate that, when the screen projection or screen recording function of the terminal device is enabled, the terminal device uses the existing animation effect function of swiping up to enter multitasking in a specific embodiment.

In this way, in the process of displaying the first animation when the screen projection or screen recording function of the terminal device is not enabled, the frame rate obtaining thread is further invoked to obtain a frame rate, and the frame rate is related to a quantity of frames included in the first animation, thereby helping calculate the quantity of frames included in the first animation. In the process of displaying the first animation when the screen projection or screen recording function of the terminal device is enabled, the frame rate obtaining thread is not invoked to obtain the frame rate, thereby helping reduce a load.

Optionally, the method further includes: displaying an interface of a second application; and displaying a second animation in response to an operation of returning to a home screen that is performed by the user, where a render thread is not invoked in a process of displaying the second animation.

The first application and the second application may be a same application or different applications. This is not limited in the embodiments of this application. The operation of returning to the home screen that is performed by the user is detected when the terminal device displays the interface of the second application, and the second animation is displayed in response to the operation of returning to the home screen that is performed by the user. The second animation is a process in which the interface of the second application is transitioned to the home screen. The render thread (for example, render Thread) is not invoked in the process of displaying the second animation by the terminal device.

The render thread is not invoked in the process of displaying the second animation by the terminal device, it may indicate that the terminal device uses the animation effect sink function of swiping up to enter multitasking provided in the embodiments of this application in a specific embodiment.

In this way, the render thread is not invoked in another scenario of displaying an animation, for example, the second animation, it may indicate that the terminal device uses the animation effect sink function of swiping up to enter multitasking provided in the embodiments of this application in a specific embodiment, thereby helping avoid the frame loss or stuttering.

Optionally, the first animation includes M image frames, each of the M image frames includes a card of the first application, and M is an integer greater than 0; and the method further includes: after the first time point, invoking a thread of Launcher to calculate parameters of the card of the first application included in each of the M image frames, to obtain M groups of first parameters; invoking the thread of the Launcher to transmit the M groups of first parameters together to the Surfaceflinger; and invoking the preset thread and the drawing thread to perform drawing based on the M groups of first parameters.

The card of the first application may be referred to as a main card. That the first animation includes M image frames, each of the M image frames includes a card of the first application is described as all frames of a main card in an animation in the example shown in FIG. 4A and FIG. 4B. After the first time point, the terminal device invokes the thread of the Launcher to calculate the parameters of the card of the first application included in each of the M image frames, to obtain the M groups of first parameters, that is, "S418: Calculate parameters of all frames of the main card in an animation" in FIG. 4A and FIG. 4B is performed. The terminal device invokes the thread of the Launcher to transmit the M groups of first parameters together to the Surfaceflinger, that is, "S419: The main thread sends the parameters of all the frames of the main card to the Surfaceflinger, and correspondingly, the Surfaceflinger receives the parameters of all the frames of the main card" in FIG. 4A and FIG. 4B is performed. The terminal device invokes the preset thread and the drawing thread to perform drawing based on the M groups of first parameters, that is, "S420: The Surfaceflinger draws the main card frame by frame based on the parameters of all the frames of the main card" in FIG. 4A and FIG. 4B is performed.

In this way, when invoking the thread of the Launcher to calculate the parameters of the card of the first application, the terminal device calculates all parameters of the card of the first application, and transmits these parameters together to the Surfaceflinger. When invoking the Surfaceflinger for drawing, the terminal device may obtain all the parameters to perform drawing based on all the parameters, thereby preventing the thread of the Launcher from failing to calculate parameters of one or more frames of the card of the first application due to an excessively large load, and further preventing the card of the first application in the first animation from the frame loss or stuttering.

Optionally, each of the M image frames further includes a card of at least one application running in a background of the terminal device, and the at least one application is different from the first application; and the method further includes: after the first time point, invoking the thread of the Launcher to calculate parameters of the card of the at least one application included in an Nth image frame, to obtain second parameters, where the Nth image frame is any image frame in the M image frames, and N is an integer greater than 0 and less than or equal to M; and invoking the thread of the Launcher to perform drawing based on the second parameters.

The card of the at least one application running in the background of the terminal device may be referred to as another card. Based on such a method, the terminal device may calculate parameters of the card of the at least one application included in each of the M image frames, and perform corresponding drawing on the card.

In this way, when invoking the thread of the Launcher to calculate the parameters of the card of the at least one application, the terminal device calculates parameters of one frame of the card of the at least one application, for example, the parameters of the card of the at least one application included in the Nth image frame, to draw the frame. In this case, the thread of the Launcher basically does not need to calculate the parameters of the card of the first application, thereby helping reduce occupation of the thread of the Launcher, and further reducing a probability of a frame loss or stuttering of the card of the at least one application in the first animation.

Optionally, the invoking the thread of the Launcher to calculate parameters of the card of the at least one application included in an Nth image frame, to obtain second parameters includes: invoking the thread of the Launcher to obtain an Nth group of parameters from the M groups of first parameters, where the Nth group of parameters are parameters of the card of the first application included in the Nth image frame; and invoking the thread of the Launcher to calculate the second parameters based on the Nth group of parameters and a preset card positional relationship parameter.

The preset card positional relationship parameter includes a positional relationship between the card of the first application and the card of the at least one application. For example, a horizontal distance between a position of the card of the at least one application and a position of the card of the first application is 3 millimeters.

In the method shown in FIG. 4A and FIG. 4B, a method used by the terminal device to invoke the thread of the Launcher to calculate the parameters of the card of the at least one application in the Nth image frame to obtain the second parameters may be shown as S422, that is, the main thread may further obtain the parameters of the main card frame by frame, and calculate the parameters of the another card based on the parameters of the main card.

In this way, the parameters (the second parameters) of the card of the at least one application in the Nth image frame are determined based on the parameters (that is, the Nth group of parameters) of the card of the first application in the Nth image frame and the preset card positional relationship parameter, thereby helping synchronize the card of the first application and the card of the at least one application in the first animation.

Optionally, the M groups of first parameters are stored in an array, and the invoking the thread of the Launcher to obtain an Nth group of parameters from the M groups of first parameters includes: invoking the thread of the Launcher to obtain the Nth group of parameters from the array.

A process used by the terminal device to invoke the thread of the Launcher to obtain the Nth group of parameters from the array may be shown in FIG. 9, that is, the main thread may convert the parameters of all the frames of the main card in the animation process from a matrix form to an array form, take parameters of one frame of the main card each time, and calculate parameters of one frame of the another card based on the parameters of the frame of the main card.

In this way, the parameters (that is, the M groups of first parameters) of the card of the first application included in each of the M image frames in the first animation are stored in the array, and the thread of the Launcher may be invoked to obtain any group of parameters in the M groups of first parameters, for example, the Nth group of parameters, from the array when the group of parameters is used, thereby helping quickly obtain the parameters, and further improving drawing efficiency.

Optionally, a drawing parameter obtained by invoking the preset thread and the drawing thread to perform drawing based on the M groups of first parameters is stored in a buffer, and a drawing parameter obtained by invoking the thread of the Launcher to perform drawing based on the second parameters is stored in the buffer; and the method further includes: invoking the Surfaceflinger to obtain a first drawing parameter of an Nth frame of the card of the first application and a second drawing parameter of an Nth frame of the card of the at least one application from the buffer; invoking the Surfaceflinger to synthesize the first drawing parameter and the second drawing parameter, to obtain synthesized information; and invoking the Surfaceflinger to send the synthesized information for display.

The buffer is the buffer shown in FIG. 4A and FIG. 4B. The buffer is configured to store the drawing parameters, that is, the drawn main card and the drawn another card described in FIG. 4A and FIG. 4B. Invoking, by the terminal device, the Surfaceflinger to obtain the first drawing parameter of the Nth frame of the card of the first application and the second drawing parameter of the Nth frame of the card of the at least one application from the buffer; invoking the Surfaceflinger to synthesize the first drawing parameter and the second drawing parameter to obtain the synthesized information; and invoking the Surfaceflinger to send the synthesized information for display refers to S424 and S425 in the method shown in FIG. 4A and FIG. 4B, that is, the Surfaceflinger may obtain the main card and the another card from the buffer frame by frame, and synthesize the main card and the another card, the Surfaceflinger may send the synthesized information to the display driver module, and correspondingly, the display driver module may display the synthesized information after receiving the synthesized information.

In this way, the Surfaceflinger is invoked to obtain the first drawing parameter of the Nth frame of the card of the first application and the second drawing parameter of the Nth frame of the card of the at least one application from the buffer, and the first drawing parameter and the second drawing parameter are synchronized and sent for display, thereby helping display the Nth image frame in the animation.

Optionally, M is positively correlated with a screen refresh rate of the terminal device. M is represented by a symbol frameCount in FIG. 4A and FIG. 4B.

In this way, the quantity M of frames included in the first animation is positively correlated with the screen refresh rate of the terminal device, so that the first animation is better adapted to the screen refresh rate, and a displayed animation is smoother.

Optionally, M and the screen refresh rate meet the following relationship: M=duratioM*1.0/(1000*1.0/frameRate), where duratioM is total duration for displaying the first animation, and frameRate is the screen refresh rate. In this way, the quantity M of frames is calculated according to the formula, thereby helping quickly determine the quantity of frames.

Optionally, the method further includes: after the second time point, invoking the Launcher to calculate parameters of the card of the first application included in an Lth image frame in the first animation, to obtain third parameters, where N is an integer greater than 0 and less than or equal to M; invoking the Launcher to transmit the third parameters to the Surfaceflinger; and invoking the drawing thread to perform drawing based on the third parameters.

In this way, in the screen recording or screen projection scenario, parameters of one frame of the card of the first application, for example, the parameters of the card of the first application included in the Lth image frame, are calculated after the second time point, to draw the frame. In this case, the existing animation effect function of swiping up to enter multitasking is used, thereby helping reduce a probability of no animation of the card of the first application.

In a possible implementation, the preset thread is used to set an attribute of a layer in any image frame included in the first animation.

Before performing drawing by using the drawing thread, the terminal device sets various attribute values of the layer by using the preset thread.

An embodiment of this application further provides a display method. The method may be applied to a terminal device. The method includes: displaying an interface of a first application; receiving an operation of pressing and swiping up that is performed by a user, and displaying, in response to a lifting operation performed by the user, a first animation after a first time point and before a second time point, where a frame rate obtaining thread is invoked after the first time point, and the second time point is after the first time point; displaying a multitasking interface at the second time point; and after the second time point, displaying a third animation in response to an operation of returning to a home screen that is performed by the user, where a render thread is not invoked in a process of displaying the third animation.

The frame rate obtaining thread is invoked in a process of displaying the first animation after the first time point and before the second time point, it may indicate that the terminal device uses an animation effect sink function of swiping up to enter multitasking provided in embodiments of this application in a specific embodiment.

The render thread is not invoked in the process of displaying the third animation by the terminal device, where the render thread is render Thread. It may indicate that the terminal device uses the animation effect sink function of swiping up to enter multitasking provided in the embodiments of this application in a specific embodiment.

In this way, after the first time point, the frame rate obtaining thread is invoked to obtain a frame rate, where the frame rate is related to a quantity of frames included in the first animation, thereby helping calculate the quantity of frames included in the first animation. The third animation is displayed in response to the operation of returning to the home screen that is performed by the user, and the render thread is not invoked in the process of displaying the third animation, it may indicate that the terminal device uses the animation effect sink function of swiping up to enter multitasking provided in the embodiments of this application in a specific embodiment, thereby helping avoid a frame loss or stuttering.

It should be noted that all module names involved in embodiments of this application may be defined as other names, provided that functions of the modules can be implemented. The module names are not specifically limited.

The method in the embodiments of this application is described above. An apparatus for performing the method provided in the embodiments of this application is described below. A person skilled in the art may understand that the method and the apparatus may be combined and mutual reference may be made, and that a related apparatus provided in an embodiment of this application may perform the steps in the foregoing method.

To implement the foregoing functions, the apparatus for implementing the display method includes corresponding hardware structures and/or software modules for performing the functions. A person skilled in the art should be easily aware that the method steps in the examples described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that such an implementation goes beyond the scope of this application.

In the embodiments of this application, the apparatus for implementing the display method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that division into modules in the embodiments of this application is an example, and is merely logical function division. During actual implementation, there may be another division manner.

FIG. 12 is a schematic diagram of a structure of a chip according to an embodiment of this application. A chip 120 includes one or more than two (including two) processors 1201, a communication line 1202, a communication interface 1203, and a memory 1204.

In some implementations, the memory 1204 stores the following elements: an executable module or a data structure, or a subset thereof, or an extended set thereof.

The foregoing method described in the embodiments of this application may be applied to the processor 1201, or implemented by the processor 1201. The processor 1201 may be an integrated circuit chip with a signal processing capability. In an implementation process, the steps of the foregoing method may be completed by using a hardware-integrated logic circuit in the processor 1201 or instructions in a form of software. The processor 1201 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 1201 may implement or perform the processing-related methods, steps, and logical block diagrams disclosed in the embodiments of this application.

The steps of the method disclosed with reference to the embodiments of this application may be directly performed by a hardware decoding processor, or performed by a combination of hardware in a decoding processor and a software module. The software module may be located in a mature storage medium in the art, for example, a random access memory, a read-only memory, a programmable read only memory, or an electrically erasable programmable read only memory (electrically erasable programmable read only memory, EEPROM). The storage medium is located in the memory 1204, and the processor 1201 reads information in the memory 1204 and completes the steps of the foregoing method in combination with hardware in the processor 1201.

The processor 1201, the memory 1204, and the communication interface 1203 may communicate with each other by using the communication line 1202.

In the foregoing embodiments, instructions stored in the memory for execution by the processor may be implemented in a form of a computer program product. The computer program product may be written into the memory in advance, or may be downloaded and installed in the memory in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium on which the computer can perform storage, or a data storage device such as a server or a data center integrating one or more available media. For example, the available media may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), and the like.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from one place to another place. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc storage; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or a wireless technology (for example, infrared, radio, and microwave), the coaxial cable, the optical fiber cable, the twisted pair, the DSL, or the wireless technology such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

## Claims

1.  A display method, applied to a terminal device, and comprising:

displaying an interface of a first application when a screen projection or screen recording function of the terminal device is not enabled;
receiving an operation of pressing and swiping up that is performed by a user, and displaying, in response to a lifting operation performed by the user, a first animation after a first time point and before a second time point, wherein a preset thread of Surfaceflinger is invoked first and a drawing thread is then invoked after the first time point, and the second time point is after the first time point;

displaying a multitasking interface at the second time point;

after the second time point, enabling the screen recording or screen projection function of the terminal device, and displaying the interface of the first application;

receiving the operation of pressing and swiping up that is performed by the user, and displaying, in response to the lifting operation performed by the user, the first animation after a third time point and before a fourth time point, wherein the preset thread is not invoked after the third time point and before the drawing thread is invoked, and the fourth time point is after the third time point; and

displaying the multitasking interface at the fourth time point.

2. The method according to claim 1, wherein the method further comprises:

further invoking a frame rate obtaining thread after the first time point and before the second time point, and before the drawing thread is invoked; and

not invoking the frame rate obtaining thread after the third time point and before the fourth time point.

3. The method according to claim 1 or 2, wherein the method further comprises:

displaying an interface of a second application; and

displaying a second animation in response to an operation of returning to a home screen that is performed by the user, wherein a render thread is not invoked in a process of displaying the second animation.

4. The method according to any one of claims 1 to 3, wherein the first animation comprises M image frames, each of the M image frames comprises a card of the first application, and M is an integer greater than 0; and

the method further comprises:

after the first time point, invoking a thread of Launcher to calculate parameters of the card of the first application comprised in each of the M image frames, to obtain M groups of first parameters;

invoking the thread of the Launcher to transmit the M groups of first parameters together to the Surfaceflinger; and

invoking the preset thread and the drawing thread to perform drawing based on the M groups of first parameters.

5. The method according to claim 4, wherein each of the M image frames further comprises a card of at least one application running in a background of the terminal device, and the at least one application is different from the first application; and

the method further comprises:

after the first time point, invoking the thread of the Launcher to calculate parameters of the card of the at least one application comprised in an Nth image frame, to obtain second parameters, wherein the Nth image frame is any image frame in the M image frames, N is an integer greater than 0 and less than or equal to M; and

invoking the thread of the Launcher to perform drawing based on the second parameters.

6. The method according to claim 5, wherein the invoking the thread of the Launcher to calculate parameters of the card of the at least one application comprised in an Nth image frame, to obtain second parameters comprises:

invoking the thread of the Launcher to obtain an Nth group of parameters from the M groups of first parameters, wherein the Nth group of parameters are parameters of the card of the first application comprised in the Nth image frame; and

invoking the thread of the Launcher to calculate the second parameters based on the Nth group of parameters and a preset card positional relationship parameter.

7. The method according to claim 6, wherein the M groups of first parameters are stored in an array, and the invoking the thread of the Launcher to obtain an Nth group of parameters from the M groups of first parameters comprises: invoking the thread of the Launcher to obtain the Nth group of parameters from the array.

8. The method according to any one of claims 5 to 7, wherein a drawing parameter obtained by invoking the preset thread and the drawing thread to perform drawing based on the M groups of first parameters is stored in a buffer, and a drawing parameter obtained by invoking the thread of the Launcher to perform drawing based on the second parameters is stored in the buffer; and

the method further comprises:

invoking the Surfaceflinger to obtain a first drawing parameter of an Nth frame of the card of the first application and a second drawing parameter of an Nth frame of the card of the at least one application from the buffer; invoking the Surfaceflinger to synthesize the first drawing parameter and the second drawing parameter to obtain synthesized information; and
invoking the Surfaceflinger to send the synthesized information for display.

9. The method according to any one of claims 4 to 8, wherein M is positively correlated with a screen refresh rate of the terminal device.

10. The method according to claim 9, wherein M and the screen refresh rate meet the following relationship:

$$M = duratioM * 1.0 / (1000 * 1.0 / frameRate),$$

and duratioM is total duration for displaying the first animation, and frameRate is the screen refresh rate.

11. The method according to any one of claims 1 to 10, wherein the method further comprises:

after the second time point, invoking the thread of the Launcher to calculate parameters of the card of the first application comprised in an Lth image frame in the first animation, to obtain third parameters, wherein N is an integer greater than 0 and less than or equal to M;
invoking the thread of the Launcher to transmit the third parameters to the Surfaceflinger; and
invoking the drawing thread to perform drawing based on the third parameters.

12. The method according to any one of claims 1 to 11, wherein the preset thread is used to set an attribute of a layer in any image frame comprised in the first animation.

13. A terminal device, comprising a processor and a memory, wherein

the memory stores computer-executable instructions; and
the processor executes the computer-executable instructions stored in the memory, to enable the terminal device to perform the method according to any one of claims 1-12.

14. A computer-readable storage medium, wherein the computer-readable storage medium stores a computer program, and when the computer program is executed by a processor, the method according to any one of claims 1-12 is implemented.

15. A computer program product, comprising a computer program, wherein when the computer program is run, a computer is enabled to perform the method according to any one of claims 1-12.

FIG. 1

Terminal device

FIG. 2

Application layer

| Camera | Calendar | Maps | Phone | System interface | Launcher |

Framework layer

| Display manager service | | Window manager service | | Surfaceflinger |

| Input module | | AMS |

Hardware abstraction layer

| Display driver module | | Sensor hardware abstraction |

| | | HIDL |

Kernel layer

| Display driver | | Sensor driver |

Hardware layer

| Microphone | | Camera | | Display screen |

FIG. 3

| Launcher | Framework layer | | | HAL |
|---|---|---|---|---|
| Main thread | Surfaceflinger | Input module | AMS | Display driver module |

S401: An operation of tapping a screen that is performed by a user

S402: Start a home screen

S403: A swipe-up operation of the user

S404: Information indicating to draw a main card

S407: Draw another card

S405: Draw the main card

S406: Store the main card in a buffer

S408: Store the another card in the buffer

S409: Obtain the main card and the another card from the buffer, and synthesize the main card and the another card

S410: Synthesized information

S411: A lifting operation of the user

S412: Set a quantity of frames to 0

S413: Obtain a configuration item and determine whether the configuration item is true

No

Yes

S414: A message requesting to obtain a frame rate

S415: The frame rate

S416: Calculate the quantity of frames based on the frame rate, and assign the quantity of frames to frameCount

S417: Whether the quantity of frames is less than or equal to 0

Yes

No

TO FIG. 4B          TO FIG. 4B          TO FIG. 4B          TO FIG. 4B   TO FIG. 4B          TO FIG. 4B

FIG. 4A

CONT. CONT.         CONT.      CONT. CONT. CONT.
FROM FROM        FROM      FROM FROM FROM
FIG. 4A FIG. 4A        FIG. 4A    FIG. 4A FIG. 4A FIG. 4A

S418: Calculate parameters of all frames of the main card in an animation

S419: The parameters of all the frames of the main card

S420: Draw the main card frame by frame

S422: Obtain the parameters of the main card frame by frame, calculate parameters of the another card based on the parameters of the main card, and draw the another card

S421: Store the drawn main card in the buffer frame by frame

S423: Store the drawn another card in the buffer frame by frame

S424: Obtain the main card and the another card from the buffer frame by frame, and synthesize the main card and the another card frame by frame

S425: Synthesized information

S426: Create an animator object

S427: Calculate parameters of an Nth frame of the main card and parameters of an Nth frame of the another card

S428: The parameters of the Nth frame of the main card

S429: Draw the Nth frame of the main card

S431: Draw the Nth frame of the another card

S430: Store the drawn Nth frame of the main card in the buffer

S432: Store the drawn Nth frame of the another card in the buffer

S433: Obtain the Nth frame of the main card and the Nth frame of the another card from the buffer, and synthesize the Nth frame of the main card and the Nth frame of the another card

S434: Synthesized information

S435: Synthesize all frames in an animation according to a process from S427 to S434

FIG. 4B

FIG. 5

Animator

Drawing is not performed, and an animation of a main card is not displayed

Surfaceflinger normally runs

FIG. 6

Calculate parameters of a main card

⇐ Parameter calculation of each frame

Scale Offset →

Another card (Animator)

Main card (Matrix)

Offset and scale

⇐ Parameter exchange performed on each frame

Main thread

Surfaceflinger

⇐ Drawing of each frame

FIG. 7

Main card

A main thread calculates parameters of all frames of the main card in an animation process

Surfaceflinger draws the main card

Parameters of each frame of the main card

Another card

Parameters of each frame of the another card

The main thread draws the another card

FIG. 8

Parameter calculation of a main card

⇓

Time difference
interface

Calculation
⇓

Main card → Parameters of all
frames are
represented by a matrix

Parameters
of all the
frames
→ Surfaceflinger draws
the main card frame by
frame ⇐ Animation
corresponding to
the main card

Conversion
⇓

Another card ← Take
parameters
of one frame
Array

A main thread draws
the another card ⇐ Animation
corresponding to
the another card

FIG. 9

EP 4 660 797 A1

35

Start — S1001

Animation effect of swiping up to enter multitasking — S1002

Calculate parameters of all frames of a main card — S1003

Store the parameters of all the frames of the main card in an array — S1004

Obtain a quantity of frames of the main card — S1005

Read parameters of one frame of the main card — S1006

Increase a reading count for a parameter 1 by 1 — S1007

Whether the reading count for the parameter 1 is greater than the quantity of frames?

No → S1008

Calculate parameters of one frame of a view card based on the parameters of one frame of the main card — S1009

Draw the frame of the view card based on the parameters of one frame of the view card

Yes → End

Read parameters of one frame of the main card — S1010

Increase a reading count for a parameter 2 by 1 — S1011

Whether the reading count for the parameter 2 is greater than a quantity of frames? — S1012

Yes

No → S1013

Draw the frame of the main card based on the parameters of one frame of the main card

FIG. 10

| Surfaceflinger | Commit | | |
| | SetsurfaceflingerAnimation | Commit 4265156 vsyncln 12.00 ms | |
| | scheduleFrame | Committed at 20230621_00:11:50.842621 | |

FIG. 11

120

1201

Processor

1204

1202

Memory

1203

Communication interface

FIG. 12

## INTERNATIONAL SEARCH REPORT

| International application No. |
| --- |
| **PCT/CN2024/081770** |

| A. | CLASSIFICATION OF SUBJECT MATTER |
| --- | --- |

G06F9/451(2018.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; IEEE; 百度, BAIDU: 投屏, 录, 屏, 滑, 动画, 线程, 任务, 界面, 页面, 窗口, screen projection, record, screen, slide, animation, thread, task, interface, page, window

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 108509127 A (TENCENT TECHNOLOGY (SHENZHEN) CO., LTD.) 07 September 2018 (2018-09-07)<br>description, paragraphs 41-187 | 1-15 |
| A | CN 114442970 A (HUAWEI TECHNOLOGIES CO., LTD.) 06 May 2022 (2022-05-06)<br>description, paragraphs 96-266 | 1-15 |
| A | US 2023178001 A1 (SAMSUNG ELECTRONICS CO., LTD.) 08 June 2023 (2023-06-08)<br>entire document | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 June 2024** | **13 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/081770**

| Patent document cited in search report | | | Publication date (day/month/year) | Patent family member(s) | | | Publication date (day/month/year) |
|---|---|---|---|---|---|---|---|
| CN | 108509127 | A | 07 September 2018 | CN | 108509127 | B | 12 April 2022 |
| CN | 114442970 | A | 06 May 2022 | WO | 2022089122 | A1 | 05 May 2022 |
| | | | | EP | 4224307 | A1 | 09 August 2023 |
| | | | | US | 2023388406 | A1 | 09 August 2023 |
| | | | | EP | 4224307A4 | A4 | 10 April 2024 |
| US | 2023178001 | A1 | 08 June 2023 | WO | 2022030757 | A1 | 10 February 2022 |
| | | | | EP | 4177879 | A1 | 10 May 2023 |
| | | | | EP | 4177879 | A4 | 20 March 2024 |
| | | | | KR | 20220017218 | A | 11 February 2022 |
| | | | | KR | 102657681 | B1 | 16 April 2024 |

Form PCT/ISA/210 (patent family annex) (July 2022)

**EP 4 660 797 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310821474